(19) Europäisches Patentamt / European Patent Office / Office européen des brevets

(11) **EP 1 924 904 B1**

(12) **FASCICULE DE BREVET EUROPEEN**

(45) Date de publication et mention de la délivrance du brevet:
**22.07.2009 Bulletin 2009/30**

(21) Numéro de dépôt: **06808073.8**

(22) Date de dépôt: **06.09.2006**

(51) Int Cl.:
*G06F 7/50* $^{(2006.01)}$

(86) Numéro de dépôt international:
**PCT/FR2006/002045**

(87) Numéro de publication internationale:
**WO 2007/031622 (22.03.2007 Gazette 2007/12)**

(54) **ADDITIONNEUR N BITS ET PROCEDE D'ADDITION CORRESPONDANT**

N-BIT-ADDIERER UND ENTSPRECHENDES ADDIERVERFAHREN

N BIT ADDER AND CORRESPONDING ADDING METHOD

(84) Etats contractants désignés:
**DE GB**

(30) Priorité: **12.09.2005 FR 0509278**

(43) Date de publication de la demande:
**28.05.2008 Bulletin 2008/22**

(73) Titulaire: **S.A.R.L. Daniel Torno**
**45100 Orléans (FR)**

(72) Inventeur: **TORNO, Daniel**
**F-45100 Orléans (FR)**

(74) Mandataire: **Guéné, Patrick**
**Cabinet Vidon**
**Technopôle Atalante**
**16B, rue de Jouanet**
**35703 Rennes Cedex 7 (FR)**

(56) Documents cités:
• **ARJHAN C ET AL: "A novel scheme for irregular parallel-prefix adders" SOUTHEASTCON '97. ENGINEERING NEW NEW CENTURY., PROCEEDINGS. IEEE BLACKSBURG, VA, USA 12-14 APRIL 1997, NEW YORK, NY, USA, IEEE, US, 12 avril 1997 (1997-04-12), pages 74-78, XP010230844 ISBN: 0-7803-3844-8**

**Description**

L'invention concerne les additionneurs et plus particulièrement les additionneurs de type à retenue anticipée (« CLA » : Carry Look-Ahead Adder » en langue anglaise), ou encore les additionneurs de type à propagation de retenue (« Ripple Carry Adder » en langue anglaise).

Classiquement, pour effectuer une addition entre deux nombres binaires, un additionneur standard calcule chaque bit de la somme résultante à partir des bits de même rang de chaque nombre binaire d'entrée, et d'une retenue propagée par l'addition des bits de rang inférieur.

En d'autres termes, ces additionneurs standards effectuent la somme des deux bits du rang considérés des deux nombres binaires d'entrée, puis effectuent une correction positive si nécessaire à l'aide de la retenue propagée.

Par exemple, les brevets US 6,175,852, et 5,636,156 (IBM) présentent ce type d'additionneurs.

Le brevet US 6,578,063 (IBM) présente également un additionneur standard mais avec cinq nombres binaires d'entrée.

Le brevet US 5,719,803 (Hewlett Packard Company) conserve la structure d'un additionneur standard en apportant une amélioration basée sur les équations de Ling.

L'un des inconvénients de ce type d'additionneurs concerne la testabilité des portes logiques de l'additionneur. En effet, de façon à vérifier le comportement des portes, il est nécessaire d'utiliser un jeu de tests de vecteurs pour détecter une erreur de comportement de l'additionneur. Dans le cas de ces additionneurs standards, le nombre de vecteurs de ce jeu de tests peut être extrêmement élevé.

L'article « A novel scheme for irregular parallel-prefix adders » de C.Arjhan et R.G.Deshmukh présente un additionneur parallèle 64 bits.

L'article « On the Adders with Minimum Tests » de Seiji Kajihara et Tsutomu Sasao propose d'améliorer la testabilité de ces additionneurs standard en modifiant certaines portes mais sans changer la structure générale de l'additionneur.

La présente invention propose une implémentation complètement différente d'un additionneur n bits, pouvant être utilisés à la place des additionneurs standards dans n'importe quelle configuration.

Un des buts de l'invention est de proposer un additionneur permettant de diminuer le nombre de vecteurs du jeu de tests utilisé pour vérifier le fonctionnement des portes logiques qu'il comprend.

Un additionneurs et un procédé d'addition selon l'invention sont respectivement définis dans les revendications indépendantes 1 et 10. D'autres modes de réalisation de l'invention sont spécifiés dans les revendications dépendantes attenantes.

A cet effet, selon un premier aspect de l'invention, il est proposé un additionneur n bits d'un premier et d'un deuxième nombres binaires, comprenant un premier moyen de calcul avec deux n entrées pour recevoir les n valeurs de bits desdits premier et deuxième nombres binaires et une entrée supplémentaire pour recevoir une retenue d'entrée. Ledit premier moyen de calcul est apte à élaborer à partir de chacune des n paires de valeurs de bits de même rang, un signal de propagation de retenue.

Selon une caractéristique générale de ce premier aspect de l'invention, le premier moyen de calcul est apte à élaborer en outre n signaux de génération diagonale, chaque signal de génération diagonale étant élaboré à partir de la valeur du bit de rang k du deuxième nombre, k variant entre 0 et n-1, et de la valeur du bit de rang k-1 du premier nombre ou de la retenue d'entrée si ledit coefficient de rang k-1 n'existe pas. Le signal de génération diagonale ($q_n$) de rang k est déterminé selon l'expression suivante :

$$q_k = \overline{\left( b_k \oplus a_{k-1} \right)}$$

ou :

- $q_k$ est le signal de génération diagonale de rang k,
- $b_k$ est le bit de rang k du deuxième nombre binaire,
- $a_{k-1}$ est le bit de rang k-1 du premier nombre binaire.

L'additionneur comprend en outre :

- un moyen d'estimation apte à effectuer une première estimation de chaque coefficient du nombre résultant de la somme du premier et du deuxième nombre, en prenant le complémentaire de la valeur du bit de rang correspondant du premier nombre,

- un deuxième moyen de calcul connecté au premier moyen de calcul et apte à élaborer un ensemble de signaux de correction à partir des signaux de propagation et des signaux de génération diagonale. Le pième signal de correction du bit de rang k, avec p variant entre 0 et u-1, est déterminé selon l'expression suivante :

$$C_k^p = q_k, \text{ si } p = 0,$$

$$C_k^p = \left[\prod_{i=1}^{p} t_{k-i}\right] \cdot q_{k-p} \text{ sinon,}$$

où:

- $C_k^p$ est le p$^{ième}$ signal de correction du bit de rang k de la somme résultante,
- $t_i$ est le signal de propagation de retenue élaboré à partir des bits de rang i des premier et deuxième nombres binaires,
- $q_k$ est le signal de génération diagonale de rang k,

- un bloc de correction comprenant n sorties et apte à appliquer à chaque valeur de bit estimée de rang k de ladite somme, k+1 corrections à l'aide desdits signaux de correction, et à délivrer en sortie les n bits de la somme des premier et deuxième nombres.

En d'autres termes, après une première estimation du résultat final, l'additionneur effectue n corrections successives qui peuvent être positives, négatives ou nulles. Ces corrections sont effectuées non seulement à l'aide des bits des nombres d'entrée et de la retenue d'entrée, mais aussi à l'aide du bit de rang précédent du premier nombre binaire, par l'intermédiaire des signaux de génération diagonale.

L'additionneur permet une nouvelle implémentation qui a notamment pour avantage d'améliorer sa testabilité comparé à un additionneur standard. En effet, des simulations en langage Verilog ont permis de démontrer par exemple, que 9 vecteurs de test suffisent pour tester un additionneur 4 bits.

Selon un mode de réalisation, le moyen d'estimation est apte en outre à effectuer une première estimation d'une retenue résultante de ladite somme du premier et du deuxième nombres, à partir du bit de poids fort du premier nombre.

Le deuxième moyen de calcul peut être apte en outre à élaborer un ensemble de signaux supplémentaires de correction de ladite résultante, à partir des signaux de propagation et des signaux de génération diagonale.

Le bloc de correction peut comprendre en outre une sortie supplémentaire pour délivrer ladite retenue résultante, et est apte à appliquer à la valeur de bit estimée de la retenue résultante, k+1 corrections à l'aide desdits signaux de correction supplémentaires.

De préférence, le bit de rang k de la somme résultante est déterminé selon l'expression suivante :

$$s_k = \overline{a_k} \oplus \sum_{i=0}^{k} C_k^i$$

où :

- $s_k$ est le bit de rang k de la somme résultante,
- $a_k$ est le bit de rang k du premier nombre binaire,
- $C_k i$ est le i$^{ième}$ signal de correction du bit de rang k de la somme résultante.

Selon un mode de réalisation, le premier moyen de calcul comprend n paires de portes « OU EXCLUSIF » et « complément du OU EXCLUSIF » tel que pour la k$^{ième}$ paire, la porte « complément du OU EXCLUSIF », est apte à recevoir en entrée le bit de rang k du deuxième nombre binaire et le bit de rang k-1 du premier nombre binaire ou la retenue d'entrée si ledit bit du premier nombre binaire de rang k-1 n'existe pas, et apte à délivrer en sortie le signal de génération diagonale correspondant, et tel que pour ladite k$^{ième}$ paire, la porte « OU EXCLUSIF » est apte à recevoir les bits de rang k du premier et du deuxième nombres binaires et est apte à délivrer le signal de propagation de retenue de rang correspondant.

Selon un mode de réalisation, le deuxième moyen de calcul comprend pour l'élaboration de chaque signal de correction du bit de rang k, k portes « ET », la i$^{ième}$ porte étant apte à élaborer un signal de correction à partir des signaux de propagation de retenue et de génération de retenue délivrés en entrée desdites portes « ET ».

Selon un mode de réalisation, le bloc de correction comprend pour l'élaboration du bit de rang k de la somme résultante k+1 portes « OU EXCLUSIF » connectées en série, chaque porte étant apte :

- à recevoir le bit de rang k estimé ou le bit de rang k délivré par la porte « OU EXCLUSIF » connecté en amont, et un signal de correction,
- à effectuer une correction sur le signal reçu en entrée à partir dudit signal de correction reçu.

Par ailleurs, selon un autre aspect de l'invention, il est proposé un système d'addition de j bits tel que j est supérieur à 2, comprenant j-1 additionneurs tel que décrit ci-avant et connectés en série, chaque additionneur étant apte à recevoir en entrée un premier nombre binaire et un deuxième nombre binaire correspondant à la somme de deux autres nombres binaires, qui est délivrée par l'additionneur connecté en amont.

Selon un autre aspect de l'invention, il est également proposé un système d'addition de j bits, tel que j est supérieur à 2, comprenant un ensemble d'additionneurs tel que décrit ci-avant connectés en parallèle, dans lequel ledit deuxième moyen de calcul de chaque additionneur :

- comprend en outre une sortie apte à délivrer un signal de propagation par groupe correspondant au produit de l'ensemble des signaux de propagation de retenue, élaborée par ledit premier moyen de calcul,
- est apte à élaborer ledit ensemble de signaux supplémentaires de correction de ladite retenue résultante, à partir des signaux de propagation et des signaux de génération diagonale, ainsi que du signal complémentaire du premier bit du deuxième nombre binaire d'entrée.

Le système peut comprendre en outre au moins un module par propagation par groupe connecté à l'ensemble des additionneurs et apte à recevoir ladite retenue résultante et ledit signal de propagation de groupe élaboré par chaque additionneur et à élaborer d'une part la retenue d'entrée d'un additionneur à partir de la retenue résultante et du signal de propagation par groupe de l'additionneur précédent, et d'autre part une nouvelle retenue résultante et un nouveau signal de propagation par groupe à partir des retenues résultantes et des signaux de propagation par groupe de l'ensemble des additionneurs.

Selon un mode de réalisation de ce troisième aspect de l'invention, le système comprend un premier ensemble de modules de propagation connectés en parallèle à la sortie des additionneurs, et un autre module de propagation, connecté à la sortie dudit premier ensemble de modules de propagation, apte à recevoir la nouvelle retenue résultante et le nouveau signal de propagation par groupe de chaque module de propagation dudit premier ensemble, et apte à élaborer à partir de chaque nouvelle retenue résultante et de chaque nouveau signal de propagation par groupe, une nouvelle retenue de sortie et un nouveau signal de propagation par groupe de sortie.

Selon un autre aspect de l'invention, il est proposé un procédés d'addition d'un premier et d'un deuxième nombre binaire de n bits dans un additionneur comprenant des moyens respectifs exécutant les phases dudit procédé, ledit procédé comprenant une phase de réception des n valeurs de bits desdits premier et deuxième nombres binaires et d'une retenue d'entrée, et une première phase de calcul comprenant l'élaboration à partir de chacune des n paires de valeurs de bits de même rang, d'un signal de propagation de retenue.

Selon une caractéristique générale de cet autre aspect de l'invention, la première phase de calcul comprend en outre l'élaboration de n signaux de génération diagonale, chaque signal de génération diagonale étant élaboré à partir de la valeur du bit de rang k du deuxième nombre, k variant entre 0 et n-1, et de la valeur du bit de rang k-1 du premier nombre ou de la retenue si ledit coefficient de rang k-1 n'existe pas. Le signal de génération diagonale ($q_n$) de rang k est déterminé selon l'expression suivante :

$$q_k = \overline{(b_k \oplus a_{k-1})}$$

où :

- $q_k$ est le signal de génération diagonale de rang k,

- $b_k$ est le bit de rang k du deuxième nombre binaire,
- $a_{k-1}$ est le bit de rang k-1 du premier nombre binaire.

Le procédé comprend en outre :

- une phase d'estimation de chaque coefficient du nombre résultant de la somme du premier et du deuxième nombres, en prenant le complémentaire de la valeur du bit de rang correspondant du premier nombre,
- une deuxième phase de calcul comprenant l'élaboration d'un ensemble de signaux de correction à partir des signaux de propagation et des signaux de génération diagonale. Le pième signal de correction du bit de rang k, avec p variant entre 0 et n-1, est déterminé selon l'expression suivante :

$$C_k^p = q_k, \text{ si } p = 0,$$

$$C_k^p = \left[ \prod_{i=1}^{p} t_{k-i} \right] \cdot q_{k-p} \text{ sinon,}$$

où :

- $C_k^p$ est le p$^{\text{ième}}$ signal de correction du bit de rang k de la somme résultante,
- $t_i$ est le signal de propagation de retenue élaboré à partir des bits de rang i des premier et deuxième nombres binaires,
- $q_k$ est le signal de génération diagonale de rang k,
- une phase de correction comprenant l'application à chaque valeur de bit estimée de rang k de ladite somme, de k+1, corrections à l'aide desdits signaux de correction, et de la délivrance en sortie des n bits de la somme des premier et deuxième nombres.

Selon un mode de mise en oeuvre, la phase d'estimation comprend en outre une première estimation d'une retenue résultant de ladite somme du premier et du deuxième nombre, à partir du bit de poids fort du premier nombre.
La deuxième phase de calcul peut comprendre en outre l'élaboration d'un ensemble de signaux supplémentaires de correction de ladite retenue résultante, à partir des signaux de propagation et des signaux de génération diagonale.
La phase de correction peut comprendre en outre la délivrance de ladite retenue résultante, et l'application à la valeur de bit estimée de la retenue résultante, k+1 corrections à l'aide desdits signaux de correction supplémentaires.
De préférence, le bit de rang k de la somme résultante est déterminé selon l'expression suivante :

$$s_k = \overline{a_k} \oplus \sum_{i=0}^{k} C_k^i$$

où :

- $s_k$ est le bit de rang k de la somme résultante,
- $a_k$ est le bit de rang k du premier nombre binaire,
- $C_k^i$ est le i$^{\text{ième}}$ signal de correction du bit de rang k de la somme résultante.

Selon un mode de mise en ouvre, la première phase de calcul comprend n paires d'opérations « OU EXCLUSIF » et « complément du OU EXCLUSIF » tel que pour la k$^{\text{ième}}$ paire d'opérations, l'opération « complément du OU EXCLUSIF » comprend la réception en entrée du bit de rang k du deuxième nombre binaire et du bit de rang k-1 du premier nombre binaire ou de la retenue si ledit bit de rang k-1 du premier nombre binaire n'existe pas, et comprend la délivrance en sortie du signal de génération diagonale correspondant, et tel que pour ladite k$^{\text{ième}}$ paire d'opérations, l'opération « OU EXCLUSIF » comprend la réception des bits de rang k du premier et du deuxième nombres binaires et la délivrance du signal de propagation de retenue de rang correspondant.

Selon un mode de mise en couvre, la deuxième phase de calcul comprend pour l'élaboration de chaque signal de correction du bit de rang k, k opérations « ET », la i[ième] opération comprenant l'élaboration d'un signal de correction à partir des signaux de propagation de retenue de génération de retenue.

Selon un mode de mise en oeuvre, la phase de correction comprend de préférence pour l'élaboration du bit de rang k de la somme résultante, k+1 opérations « OU EXCLUSIF » en série, comprenant la réception du bit de rang k estimé ou de bit de rang k traité lors de la précédente opération « OU EXCLUSIF » de la phase de correction, et un signal de correction, chaque opération « OU EXCLUSIF » comprenant la correction du signal reçu en entrée, à partir dudit signal de correction.

D'autres avantages et caractéristiques de l'invention apparaîtront à l'examen de la description détaillée d'un procédé et des modes de réalisation de l'invention nullement limitatifs, et des dessins annexés sur lesquels :

- la figure 1 représente schématiquement un premier mode de réalisation d'un additionneur selon l'invention,
- la figure 2 représente un mode de mise en oeuvre du procédé selon l'invention,
- la figure 3 représente plus précisément un mode de réalisation d'un additionneur selon l'invention,
- la figure 4 représente un système comprenant plusieurs additionneurs selon l'invention,
- la figure 5 représente un autre système comprenant plusieurs additionneurs selon l'invention,
- la figure 6 représente plus précisément un additionneur compris par exemple dans le système représenté sur la figure 5,
- la figure 7 représente un autre système comprenant plusieurs additionneurs selon l'invention.

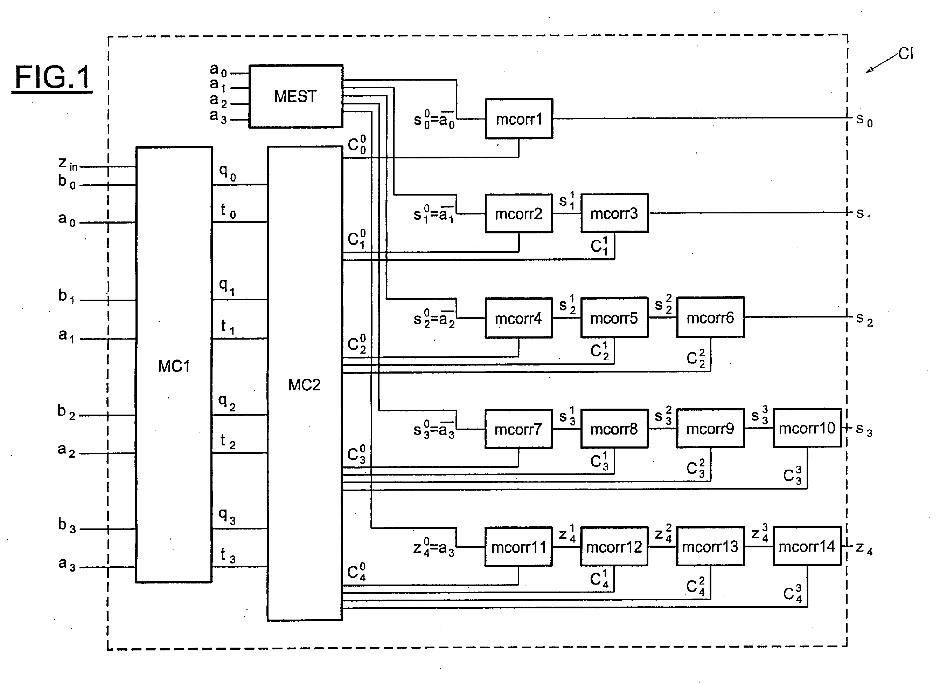

Sur la figure 1, on a représenté un circuit intégré CI. La référence ADD représente un additionneur selon l'invention. Il comprend un premier moyen de calcul MC1 apte à recevoir deux nombres binaires A et B tels que :

$$A = a_3 \cdot 2^3 + a_2 \cdot 2^2 + a_1 \cdot 2 + a_0$$

$$B = b_3 . 2^3 + b_2 \cdot 2^2 + b_1 \cdot 2 + b_0$$

Dans cet exemple, les premiers nombres binaires A et B comprennent quatre bits mais l'exemple s'applique plus généralement à tout nombre binaire de n bits. En outre, dans cet exemple, A est considéré comme le premier nombre binaire et B comme le deuxième nombre binaire, mais leur rôle peut bien entendu être échangé.

Le premier moyen de calcul MC1 comprend ici une première entrée pour la retenue d'entrée $z_{in}$ et quatre paires d'entrée pour les quatre bits du premier et du deuxième nombre binaire, respectivement $a_0$ et $b_0$, $a_1$ et $b_1$, $a_2$ et $b_2$ et $a_3$ et $b_3$.

A partir de ces bits d'entrée, le premier moyen de calcul MC1 élabore deux types de signaux : des signaux de propagation de retenue $t_n$ et des signaux de génération diagonale $q_n$. Les signaux de propagation de retenue $t_n$ et les signaux de génération diagonale $q_n$ peuvent s'exprimer sous la forme :

$$\begin{cases} t_n = b_n \oplus a_n \\ q_n = \overline{(b_n \oplus a_{n-1})} \end{cases}$$

et :

$$q_0 = \overline{b_0 \oplus z_{in}}$$

Les signaux de génération diagonale ont été élaborés par l'inventeur grâce notamment à une nouvelle expression des bits de la somme résultante du premier et du deuxième nombre binaire d'entrée de l'additionneur et de la retenue résultante de cette même addition.

En effet, en partant d'une expression de la retenue résultante $z_n$ et des bits de la somme $s_n$ :

$$\begin{cases} z_n = g_{n-1} + p_{n-1} \cdot z_{n-1} \\ s_n = t_n \oplus z_n \end{cases}$$

et des signaux de génération d'une retenue en n, $g_n$, des signaux de propagation ou génération d'une retenue en n, $p_n$ et des signaux de propagation d'une retenue en n sans génération $t_n$, utilisés par un additionneur standard, tel que :

$$\begin{cases} g_n = a_n \cdot b_n \\ p_n = a_n + b_n \\ t_n = a_n \oplus b_n \end{cases}$$

l'inventeur a établi que la retenue élaborée à chaque rang s'exprime selon la formule suivante :

$$Z_n = a_{n-1} \oplus t_{n-1} \cdot q_{n-1} \oplus t_{n-1} \cdot t_{n-2} \cdot q_{n-2} \oplus t_{n-1} \cdot t_{n-2} \cdot t_{n-3} \cdot q_{n-3} \oplus \ldots \oplus t_{n-1} \cdot t_{n-2} \ldots t_1 \cdot t_0 \cdot q_0$$

où :

$q_n$ est le signal de génération diagonale selon la formule établie ci-dessus.

Ainsi, pour les deux nombres binaires A et B cités précédemment, il vient :

$$\begin{cases} z_1 = a_0 \oplus t_0 \cdot q_0 \\ z_2 = a_1 \oplus t_1 \cdot q_1 \oplus t_1 \cdot t_0 \cdot q_0 \\ z_3 = a_2 \oplus t_2 \cdot q_2 \oplus t_2 \cdot t_1 \cdot q_1 \oplus t_2 \cdot t_1 \cdot t_0 \cdot q_0 \\ z_4 = a_3 \oplus t_3 \cdot q_3 \oplus t_3 \cdot t_2 \cdot q_2 \oplus t_3 \cdot t_2 \cdot t_1 \cdot q_1 \oplus t_3 \cdot t_2 \cdot t_1 \cdot t_0 \cdot q_0 \end{cases}$$

Par conséquent, en substituant $Z_n$ dans :

$$s_n = t_n \oplus z_n = a_n \oplus b_n \oplus z_n$$

on obtient :

$$\left\{ \begin{array}{l} s_1 = \overline{a_1} \oplus q_1 \oplus t_0 \cdot q_0 \\ s_2 = \overline{a_2} \oplus q_2 \oplus t_1 \cdot q_1 \oplus t_1 \cdot t_0 \cdot q_0 \\ s_3 = \overline{a_3} \oplus q_3 \oplus t_2 \cdot q_2 \oplus t_2 \cdot t_1 \cdot q_1 \oplus t_2 \cdot t_1 \cdot t_0 \cdot q_0 \end{array} \right.$$

et

$$s_0 = t_0 \oplus z_{in}$$

Cette nouvelle expression de la retenue résultante au rang n, $z_n$, est obtenue tout d'abord en l'exprimant en fonction du signal de propagation de retenue $t_{n-1}$, au rang n-1. Comme $z_n = g_{-n1} + p_{n-1} \cdot z_{-n1}$, il vient alors selon les règles classiques de logique combinatoire :

$$z_n = g_{n-1} + p_{n-1} \cdot z_{n-1}$$

$$z_n = a_{n-1} \cdot b_{n-1} + (a_{n-1} + b_{n-1}) \cdot z_{n-1}$$

$$z_n = a_{n-1} \cdot b_{n-1} + (a_{n-1} \oplus b_{n-1} \oplus a_{n-1} \cdot b_{n-1}) \cdot z_{n-1}$$

$$z_n = a_{n-1} \cdot b_{n-1} + a_{n-1} \cdot b_{n-1} \cdot z_{n-1} + (a_{n-1} \oplus b_{n-1}) \cdot z_{n-1}$$

$$z_n = a_{n-1} \cdot b_{n-1} \cdot (1 + z_{n-1}) + (a_{n-1} \oplus b_{n-1}) \cdot z_{n-1}$$

$$z_n = a_{n-1} \cdot b_{n-1} + (a_{n-1} \oplus b_{n-1}) \cdot z_{n-1}$$

$$z_n = a_{n-1} \cdot b_{n-1} \oplus (a_{n-1} \oplus b_{n-1}) \cdot z_{n-1} \oplus a_{n-1} \cdot b_{n-1} \cdot (a_{n-1} \oplus b_{n-1}) \cdot z_{n-1}$$

$$z_n = a_{n-1} \cdot b_{n-1} \oplus (a_{n-1} \oplus b_{n-1}) \cdot z_{n-1}$$

$$z_n = g_{n-1} \oplus t_{n-1} \cdot z_{n-1}$$

En exprimant le signal de génération d'une retenue $g_{n-1}$ au rang n-1 en fonction du signal de propagation d'une retenue $t_{n-1}$, au rang n-1 sans génération, il vient :

$$g_{n-1} = a_{n-1} \cdot b_{n-1}$$

$$g_{n-1} = a_{n-1} \cdot \left(1 \oplus \overline{b_{n-1}}\right)$$

$$g_{n-1} = a_{n-1} \oplus a_{n-1} \cdot \overline{b_{n-1}}$$

$$g_{n-1} = a_{n-1} \oplus \overline{b_{n-1}} \cdot \left(a_{n-1} \oplus b_{n-1}\right)$$

$$g_{n-1} = a_{n-1} \oplus \overline{b_{n-1}} \cdot t_{n-1}$$

Par conséquent, en remplaçant la valeur de $g_{n-1}$ dans la dernière expression de $z_n$ ci-dessus, il vient :

$$z_n = a_{n-1} \oplus \overline{b_{n-1}} \cdot t_{n-1} \oplus z_{n-1} \cdot t_{n-1}$$

ou encore

$$z_n = a_{n-1} \oplus t_{n-1} \cdot \left(\overline{b_{n-1}} \oplus Z_{n-1}\right)$$

Par conséquent, au vu de ce qui précède, en remplaçant $z_{n-1}$ par :

$$a_{n-2} \oplus t_{n-2} \cdot \left(\overline{b_{n-2}} \oplus Z_{n-2}\right),$$

(obtenue par récurrence) il vient :

$$z_n = a_{n-1} \oplus t_{n-1} \cdot \left(\overline{b_{n-1}} \oplus a_{n-2} \oplus t_{n-2} \cdot \left(\overline{b_{n-2}} \oplus Z_{n-2}\right)\right) \quad .$$

$q_n$ étant défini par : $q_n = \overline{b_n \oplus a_{n-1}}$ et donc qn-1 par :
$q_{n-1} = \overline{b_n \oplus a_{n-2}}$, il vient :

$$z_n = a_{n-1} \oplus t_{n-1}\left(q_{n-1} \oplus t_{n-2} \cdot \left(b_{n-2} \oplus Z_{n-2}\right)\right)$$

En remplaçant les termes $z_{n-i}$ par des expressions obtenues par récurrence, on obtient la formule de $z_n$ mentionnée ci-dessus.
Le premier bloc de calcul MC1 délivre donc les signaux de propagation de retenue et de génération diagonale du rang 0 à 3, respectivement $q_0$ et $t_0$, $q_1$ et $t_1$, $q_2$ et $t_2$ et $q_3$ et $t_3$.
L'additionneur ADD comprend également un moyen d'estimation MEST qui reçoit en entrée les bits du premier nombre binaire A, c'est-à-dire $a_0$, $a_1$, $a_2$ et $a_3$.
A partir de ces différentes entrées, le moyen d'estimation MEST estime les bits de la somme $s_n$ des deux nombres binaires A et B.
En d'autres termes, les bits $s_n$ de la somme S des nombres A et B vont être dans un premier temps estimés comme étant égaux au complémentaire des bits du premier nombre binaire A, c'est-à-dire $\overline{a_0}, \overline{a_1}, \overline{a_2}$ et $\overline{a_3}$.

Par ailleurs, l'additionneur ADD comprend un deuxième moyen de calcul MC2 connecté au premier moyen de calcul MC1.

Le premier moyen de calcul MC1 délivre alors les différents signaux de propagation de retenue et de génération diagonale $q_0$, $t_0$, ...$q_3$; $t_3$ au deuxième moyen de calcul MC2.

A partir de ces différents signaux d'entrée, le deuxième moyen de calcul MC2 élabore des signaux de correction qui sont appliqués aux différentes estimations des bits de la somme résultante de A et B délivrées par le moyen d'estimation MEST.

Les différents signaux de correction $C_0^0$, $C_1^0$, $C_1^1$, $C_2^0$, ...,$C_2^2$, $C_3^0$, ..., $C_3^3$ sont calculés à partir de la formule suivante :

$$
\begin{cases}
C_0^0 = q_0 \\
C_1^0 = q_1, \ C_1^1 = t_0 \cdot q_0 \\
C_2^0 = q_2, \ C_2^1 = t_1 \cdot q_1, \ C_2^2 = t_1 \cdot t_0 \cdot q_0 \\
C_3^0 = q_3, \ C_3^1 = t_2 \cdot q_2, \ C_3^2 = t_2 \cdot t_1 \cdot q_1, \ C_3^3 = t_2 \cdot t_1 \cdot t_0 \cdot q_0
\end{cases}
$$

Le deuxième moyen de calcul MC2 délivre les signaux de correction à différents moyens de correction, mcorr1, ...mcorr14.

Le signal de correction $C0^0$ est appliqué à la première estimation du premier bit de la somme $s_0^0$ c'est-à-dire $\overline{a_0}$. Cette correction permet d'obtenir le bit définitif de rang 0 de la somme S, c'est-à-dire $s_0$.

La première estimation $s_1^0$ du deuxième bit de la somme $s_1$, est corrigée une première fois par l'intermédiaire du bloc mcorr2 qui reçoit le signal de correction $C_1^0$. Le bloc de correction mcorr2 délivre alors une deuxième estimation $s_1^1$ du bit $s_1$ de la somme des nombres A et B. Cette deuxième estimation $s_1^1$ est délivrée au bloc de correction mcorr3 qui reçoit également le signal de correction $C_1^1$. Le bloc de correction mcorr3 délivre alors le bit $s_1$ de la somme S.

De même, la première estimation $s_2^0$ du troisième bit $s_2$ de la somme. S est corrigée successivement par les blocs de correction mcorr4, mcorr5 et mcorr6 qui reçoivent respectivement les signaux de correction $C_2^0$, $C_2^1$ et $C_2^2$.

De même, la troisième estimation $s_3^0$ du quatrième bit $s_3$ de la somme S est corrigée successivement par les quatre blocs de correction mcorr7, mcorr8, mcorr9 et mcorr10 qui reçoivent respectivement les signaux de correction $C_3^0$, $C_3^1$, $C_3^2$ et $C_3^3$.

L'additionneur ADD comprend une sortie supplémentaire pour délivrer une retenue $z_4$ correspondant à la retenue de la somme des deux nombres A et B.

Cette sortie supplémentaire peut ne pas exister, par exemple dans le cas d'un additionneur utilisé pour réaliser un adressage circulaire sur 16 valeurs, utilisées notamment en filtrage numérique d'un signal pour adresser les 16 coefficients du filtre ou encore pour le calcul de la transformation rapide de Fourier.

De même que pour les différents coefficients $s_0$...$s_3$ de la somme S, la retenue résultante $z_4$ est estimée par les moyens d'estimation MEST. A l'issue de la première estimation, la retenue $z_4^0$ est égale au bit de point fort du premier nombre binaire, c'est-à-dire $a_3$.

Cette première estimation est corrigée par l'intermédiaire de quatre blocs de correction mcorr11, mcorr12, mcorr13 et mcorr14 qui reçoivent respectivement les signaux de correction $C_4^0$, ..., $C_4^3$.

Ces signaux de correction sont délivrés par le deuxième moyen de calcul MC2 et sont élaborés à partir de la formule ci-dessous :

$$
C_4^0 = t_3 \cdot q_3, \ C_4^1 = t_3 \cdot t_2 \cdot q_2, \ C_4^2 = t_3 \cdot t_2 \cdot t_1 \cdot q_1, \ C_4^3 = t_3 \cdot t_2 \cdot t_1 \cdot t_0 \cdot q_0.
$$

Finalement, les bits de la somme S et la retenue résultante $z_4$ sont obtenus par les formules :

$$\begin{cases} S_0 = S_0^0 \oplus C_0^0 \\ S_1 = S_1^0 \oplus C_1^0 \oplus C_1^1 \\ S_2 = S_2^0 \oplus C_2^0 \oplus C_2^1 \oplus C_2^2 \\ S_3 = S_3^0 \oplus C_3^0 \oplus C_3^1 \oplus C_3^2 \oplus C_3^3 \end{cases}$$

et

$$Z_4 = a_3 \oplus C_4^0 \oplus C_4^1 \oplus C_4^2 \oplus C_4^3 \ .$$

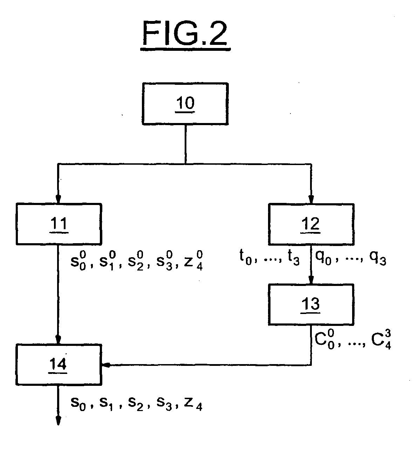

On se réfère à présent à la figure 2 qui illustre un exemple de procédé mis en oeuvre par un additionneur selon l'invention.

Lors d'une première étape 10, l'additionneur reçoit les bits des deux nombres à additionner, respectivement A et B ainsi qu'une retenue d'entrée $z_{in}$.

Au cours de l'étape 11, on effectue une première estimation de la somme résultante S des nombres binaires A et B à partir des bits du premier nombre binaire A.

Au cours d'une étape 12, on élabore à partir des bits des nombres binaires d'entrée A et B les signaux de propagation de retenue et les signaux de génération diagonale, respectivement $t_0, ...,t_3$ et $q_0, ...q_3$.

Au cours d'une étape 13, on élabore à partir des signaux de propagation de retenue et de génération diagonale, différents signaux de correction $C_n^k$.

Au cours d'une étape 14, on applique ces différents signaux de correction aux premières estimations des bits de la somme S ainsi que de la retenue résultante de façon à obtenir les bits $s_0$, $s_1$, $s_2$ et $s_3$ de la somme S et la retenue résultante $z_4$.

Un premier exemple de ce procédé est donné dans le tableau ci-dessous avec comme premier nombre binaire A=0101 (ligne 1 du tableau), comme deuxième nombre binaire B=0011 (ligne 2) et comme retenue d'entrée $z_{in}$=0.

| Indice n | 3 | 2 | 1 | 0 | $Z_{in}$ |
|---|---|---|---|---|---|
| A | 0 | 1 | 0 | 1 | 0 |
| B | 0 | 0 | 1 | 1 | |
| $t_n = a_n \oplus b_n$ | 0 | 1 | 1 | 0 | |
| $q_n = \overline{b_n \oplus a_{n-1}}$ | 0 | 1 | 1 | 0 | |
| $s_n^0 = \overline{a_n}$ | 1 | 0 | 1 | 0 | |
| $C_n^0 = q_n$ | 0 | 1 | 1 | 0 | |
| $s_n^1 = C_n^0 \oplus s_n^0$ | 1 | 1 | 0 | 0 | |
| $C_n^1 = t_{n-1} \cdot q_{n-1}$ | 1 | 1 | 0 | | |
| $s_n^2 = C_n^1 \oplus s_n^1$ | 0 | 0 | 0 | 0 | |

(suite)

| Indice n | 3 | 2 | 1 | 0 | $Z_{in}$ |
|---|---|---|---|---|---|
| $C_n^2 = t_{n-1} \cdot t_{n-2} \cdot q_{n-2}$ | 1 | 0 | | | |
| $s_n^3 = C_n^2 \oplus s_n^2$ | 1 | 0 | 0 | 0 | |
| $C_n^3 = t_{n-1} \cdot t_{n-2} \cdot t_{n-3} \cdot q_{n-3}$ | 0 | | | | |
| $S = C_n^3 \oplus s_n^3$ | 1 | 0 | 0 | 0 | |

Au cours d'une première étape, on calcule les signaux $t_n$ et $q_n$ tels que définis ci-dessus. On a alors $t_n$=0110 (ligne 3) et $q_n$=0110 (ligne 4). On effectue ensuite une première estimation de chaque bit de la somme résultante (ligne 5) puis on calcule les premiers signaux de correction à appliquer à chaque valeur de bit estimée (ligne 6).

On en déduit alors une deuxième estimation des bits de la somme, c'est-à-dire $s_0^1$, $s1^1$, $s_2^1$ et $s_3^1$ (ligne 7).

On calcule les deuxièmes signaux de correction des deuxièmes valeurs estimées des bits de la somme résultante (ligne 8).

On corrige une deuxième fois les bits de la somme résultante de façon à obtenir $s_3^2$ et $s_2^2$ (ligne 9).

On calcule les signaux de correction à appliquer aux bits estimés $s_3^2$ et $s_2^2$ selon la formule reprise dans le tableau (ligne 10), et on en déduit le bit estimé $s_3^3$ (ligne 11).

Finalement, on calcule selon la formule reprise dans le tableau le dernier signal correctif de façon à obtenir la somme finale S qui est ici égale à 1000 (ligne 12).

L'expression initiale de la somme étant 1010 et l'expression finale étant 1000, les corrections ont eu dans cet exemple un effet négatif. Par ailleurs, la retenue sortante est nulle. En effet,

$$Z_4 = a_3 \oplus C_4^0 \oplus C_4^1 \oplus C_4^2 \oplus C_4^3 = 0,$$

avec :

$$C_4^0 = t_3 \cdot q_3 = 0, \quad C_4^1 = t_3 \cdot t_2 \cdot q_2 = 0, \quad C_4^2 = t_3 \cdot t_2 \cdot t_1 \cdot q_1 = 0, \quad C_4^3 = t_3 \cdot t_2 \cdot t_1 \cdot t_0 \cdot q_0 = 0$$

Le tableau ci-dessous illustre un autre exemple avec comme premier nombre binaire A=1110 (ligne 1 du tableau ci-dessous), comme deuxième nombre binaire B=0101 (ligne 2), et comme retenue entrante $z_{in}$ = 1.

| Indice n | 3 | 2 | 1 | 0 | $Z_{in}$ |
|---|---|---|---|---|---|
| A | 1 | 1 | 1 | 0 | 1 |
| B | 0 | 1 | 0 | 1 | |
| $t_n = a_n \oplus b_n$ | 1 | 0 | 1 | 1 | |
| $q_n = \overline{b_n} \oplus \overline{a_{n-1}}$ | 0 | 1 | 1 | 1 | |
| $s_n^0 = \overline{a_n}$ | 0 | 0 | 0 | 1 | |

(suite)

| Indice n | 3 | 2 | 1 | 0 | $Z_{in}$ |
|---|---|---|---|---|---|
| $C_n^0 = q_n$ | 0 | 1 | 1 | 1 | |
| $s_n^1 = C_n^0 \oplus s_n^0$ | 0 | 1 | 1 | 0 | |
| $C_n^1 = t_{n-1} \cdot q_{n-1}$ | 0 | 1 | 1 | | |
| $s_n^2 = C_n^1 \oplus s_n^1$ | 0 | 0 | 0 | 0 | |
| $C_n^2 = t_{n-1} \cdot t_{n-2} \cdot q_{n-2}$ | 0 | 1 | | | |
| $s_n^3 = C_n^2 \oplus s_n^2$ | 0 | 1 | 0 | 0 | |
| $C_n^3 = t_{n-1} \cdot t_{n-2} \cdot t_{n-3} \cdot q_{n-3}$ | 0 | | | | |
| $S = C_n^3 \oplus s_n^3$ | 0 | 1 | 0 | 0 | |

L'estimation initiale de la somme est ici 0001 et l'expression finale est 0100. Les corrections ont donc eu un effet positif. La retenue sortante est ici :

$$Z_4 = a_3 \oplus C_4^0 \oplus C_4^1 \oplus C_4^2 \oplus C_4^3 = 1$$

avec

$$C_4^0 = t_3 \cdot q_3 = 0, \quad C_4^1 = t_3 \cdot t_2 \cdot q_2 = 0, \quad C_4^2 = t_3 \cdot t_2 \cdot t_1 \cdot q_1 = 0, \quad C_4^3 = t_3 \cdot t_2 \cdot t_1 \cdot t_0 \cdot q_0 = 0$$

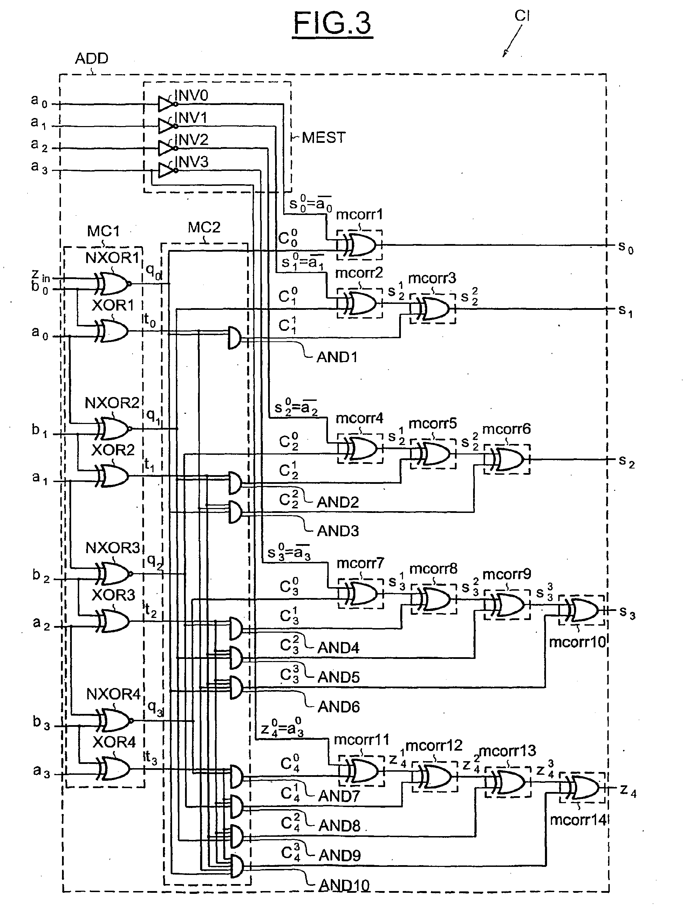

On se réfère à présent à la figure 3 qui illustre un mode de réalisation des différents modules de l'additionneur selon l'invention permettant une mise en oeuvre du procédé selon l'invention.

Dans cet exemple, le premier moyen de calcul MC1 comprend quatre paires de portes « OU EXCLUSIF » et « complément du OU EXCLUSIF », respectivement NXOR1 et XOR1, NXOR2 et XOR2, NXOR3 et XOR3, NXOR4 et XOR4.

La première porte « complément du OU EXCLUSIF » NXOR1 reçoit en entrée la retenue d'entrée $z_{in}$ et le premier bit $b_o$ du deuxième nombre binaire d'entrée B, et délivre en sortie le signal de génération diagonale $q_0$, élaboré selon la formule définie ci-avant.

La porte logique XOR1 reçoit en entrée le premier bit $b_0$ du deuxième nombre binaire B et le premier bit $a_0$ du premier nombre binaire A. La porte logique XOR1 délivre en sortie le signal de propagation de retenue $t_0$, élaboré selon la formule définie ci-avant.

De même, la porte logique NXOR2 reçoit en entrée le premier bit $a_0$ du premier nombre binaire A et le deuxième bit $b_1$ du deuxième nombre binaire B, et délivre en sortie le signal de vénération diagonale $q_1$.

La porte XOR2 reçoit en entrée le deuxième bit $b_1$ du deuxième nombre binaire B et le deuxième bit $a_1$ du

premier nombre binaire A, et délivre en sortie le signal de propagation de retenue $t_1$.

La porte logique NXOR3 reçoit en entrée le deuxième bit $a_1$ du premier nombre binaire A et le troisième bit $b_2$ du deuxième nombre binaire d'entrée, et délivre en sortie le signal de génération diagonale q2.

La porte logique XOR3 reçoit en entrée le troisième bit $b_2$ du deuxième nombre binaire d'entrée B et le troisième bit $a_2$ du premier nombre binaire A, et délivre en sortie le signal de propagation de retenue $t_2$.

La porte logique NXOR4 reçoit en entrée le troisième bit $a_2$ du premier nombre binaire A et le quatrième bit $b_3$ du deuxième nombre binaire B.

La porte logique XOR4 reçoit en entrée le dernier bit $b_3$ du deuxième nombre binaire B et le dernier bit $a_3$ du premier nombre binaire A, et délivre en sortie le signal de propagation de retenue $t_3$. L'ensemble des sorties des portes NXOR1, XOR1, ..., NXOR4, XOR4 sont connectées à l'entrée du deuxième moyen de calcul MC2.

A partir des signaux délivrés par le premier moyen de calcul MC1, le deuxième moyen de calcul MC2 élabore les différents signaux de corrections.

Etant donné que le signal de correction $C_0^0$ est égal au signal de génération diagonale $q_0$, celui-ci est directement délivré en sortie du deuxième moyen de calcul MC2 vers le moyen de correction mcorr1.

De même, étant donné que le signal de correction $C_1^0$ est égal au signal $q_1$, celui-ci est directement délivré en sortie du deuxième moyen de calcul MC2 vers le moyen de correction mcorr2.

Pour élaborer le signal de correction $C_1^1$, le deuxième moyen de calcul MC2 comprend une porte logique « ET » AND1, qui reçoit en entrée les signaux $q_0$ et $t_0$ et délivre en sortie $C_1^1$.

Le signal $q_2$ est directement délivré en sortie du deuxième moyen de calcul MC2 vers le moyen de correction mcorr4, étant donné que le signal $C_2^0$ est égal au signal $q_2$.

Pour élaborer le signal de correction $C_2^1$, le deuxième moyen de calcul MC2 comprend une porte logique « ET » AND2, qui reçoit en entrée les signaux $t_1$ et $q_1$ et délivre le signal $C_2^1$. De même, pour élaborer le signal $C_2^2$, le deuxième moyen de calcul MC2 comprend une porte logique « ET » AND3, qui reçoit en entrée les signaux $t_1$, $t_0$ et $q_0$ et délivre le signal $C_2^2$.

Pour élaborer le signal de correction $C_3^0$, le deuxième moyen de calcul délivre directement en sortie le signal $q_3$ vers le moyen de correction mcorr7.

De même que pour les signaux de correction précédents, le signal de correction $C_3^1$ est élaboré à l'aide d'une porte logique « ET » AND4, qui reçoit en entrée le signal $t_2$ et le signal $q_2$. Le signal de correction $C_3^2$ est élaboré à l'aide d'une porte logique « ET » AND5, qui reçoit en entrée les signaux $t_2$, $t_1$, et $q_1$. Le signal de correction $C_3^3$ est élaboré à l'aide d'une porte logique « ET » AND6, qui reçoit en entrée les signaux $t_2$, $t_1$, $t_0$ et $q_0$.

Pour élaborer les signaux de correction de la retenue résultante $z_4$, le deuxième moyen de calcul MC2 comprend quatre portes logiques « ET » AND7, AND8, AND9, AND10. La porte logique « ET » AND7 reçoit en entrée les signaux $t_3$ et $q_3$ et délivre en sortie le signal $C_4^0$. La deuxième porte logique AND8 reçoit en entrée les signaux $t_3$, $t_2$ et $q_2$ et délivre en sortie le signal de correction $C_4^1$.

La troisième porte logique AND9 reçoit en entrée les signaux $t_3$, $t_2$, $t_1$ et $q_1$ et délivre en sortie le signal de correction $C_4^2$.

La dernière porte logique AND 10 reçoit en entrée les signaux $t_3$, $t_2$, $t_1$ et $q_0$, et délivre en sortie le signal de correction $C_4^3$.

Le moyen d'estimation MEST peut être réalisé à l'aide de quatre inverseurs respectivement INV0, INV1 , INV2 et INV3 qui reçoivent respectivement en entrée les bits $a_0$, $a_1$, $a_2$ et $a_3$ et délivrent en sortie les signaux $a_0$, $a_1$, $a_2$ et $a_3$ aux moyens de correction. En outre, le moyen d'estimation MEST délivre directement en sortie le bit de poids fort $a_3$ du premier nombre binaire A, pour l'élaboration de la retenue résultante $z_4$.

L'ensemble des moyens de correction mcorr1, ...mcorr14, est réalisé à l'aide de portes « OU EXCLUSIF ».

La porte « OU EXCLUSIF » réalisant le moyen de correction mcorr1 reçoit en entrée la première estimation $s_0$ du premier bit de la somme S et le signal de correction $C_0^0$, et délivre en sortie le bit $s_0$.

La porte « OU EXCLUSIF » mcorr2 reçoit en entrée la première estimation $S_1$ du deuxième bit de la somme S et le signal de correction $C_1^0$ et délivre en sortie un signal intermédiaire $s_1^1$ correspondant à une deuxième estimation $S_1^1$ du deuxième bit de la somme S. La porte logique « OU EXCLUSIF » mcorr3 reçoit en entrée le signal $s_1^1$ et le signal de correction $C_1^1$ et délivre en sortie le deuxième bit $s_1$ de la somme S.

La porte « OU EXCLUSIF » mcorr4 reçoit en entrée la première estimation $S_2^0$ du troisième bit de la somme S et le signal de correction $C_2^0$ et délivre en sortie le signal $s_2^1$. La porte « OU EXCLUSIF » mcorr5 reçoit en entrée ce signal $s_2^1$ et le signal de correction $C_2^1$, et délivre en sortie le signal $s_2^2$. La porte « OU EXCLUSIF » mcorr6 reçoit en entrée le signal $s_2^2$ et le signal de correction $C_2^2$ et délivre en sortie le troisième bit $s_2$.

De même, la porte « OU EXCLUSIF » mcorr7 reçoit en entrée la première estimation $S_3^0$ du troisième bit de la somme S, et le signal de correction $C_3^0$ et délivre en sortie le signal $s_3^1$. La porte « OU EXCLUSIF » mcorr8 reçoit en entrée ce signal $s_3^1$ et le signal de correction $C_3^1$ et délivre en sortie le signal de correction $s_3^2$ à une porte « OU EXCLUSIF » constituant le moyen de correction mcorr9. En outre, la porte « OU EXCLUSIF » mcorrr9 reçoit en entrée le signal de correction $C_3^2$ et délivre en sortie le signal $s_3^3$. La porte « OU EXCLUSIF » mcorr10 reçoit en entrée le

signal $s_3{}^3$ et le signal de correction $C_3{}^3$ et délivre en sortie le dernier bit $s_2$ de la somme S.

De même, pour l'élaboration de la retenue résultante $z_4$, le moyen de correction mcorr11 est réalisé par une porte « OU EXCLUSIF » qui reçoit en entrée la première estimation $z_4{}^0$ de la retenue $z_4$ et le signal de correction $C_4{}^0$ et délivre en sortie le signal $z_4{}^1$. Le moyen de correction mcorr12 comprend une porte logique « OU EXCLUSIF » qui reçoit en entrée le signal $z_4{}^1$ et le signal de correction $C_4{}^1$ et délivre en sortie le signal $z_4{}^2$ vers le moyen de correction mcorr13. Le moyen mcorr13 comprend une porte logique « OU EXCLUSIF » qui reçoit également en entrée le signal de correction $C_4{}^2$, et délivre en sortie le signal $z_4{}^3$ à destination de la porte logique « OU EXCLUSIF » réalisant le moyen de correction mcorr14. Le moyen mcorr14 reçoit également en entrée le signal de correction $C_4{}^3$ et délivre en sortie la retenue résultante $z_{3-0}$.

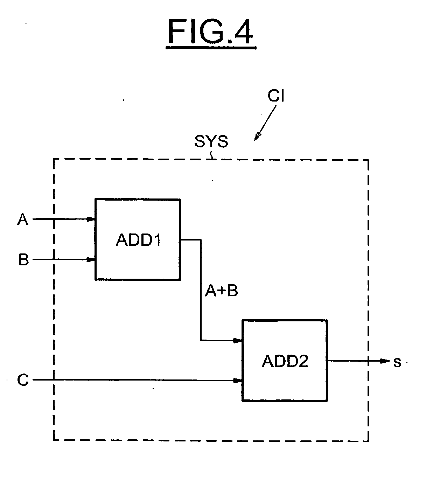

On se réfère à présent à la figure 4 qui illustre un circuit intégré comprenant un système pour effectuer une addition avec trois nombres binaires A, B et C.

Le système SYS comprend un premier additionneur ADD1 et un deuxième additionneur ADD2. Le premier additionneur ADD1 reçoit en entrée le premier et le deuxième nombres binaires respectivement A et B et élabore en sortie une somme A + B.

Le deuxième additionneur ADD2 reçoit en entrée la somme intermédiaire A + B ainsi que le troisième nombre binaire C et élabore une somme S correspondant à la somme des trois nombres binaires d'entrée A, B et C.

Pour chaque nombre binaire supplémentaire à additionner, le système SYS comprend un additionneur supplémentaire.

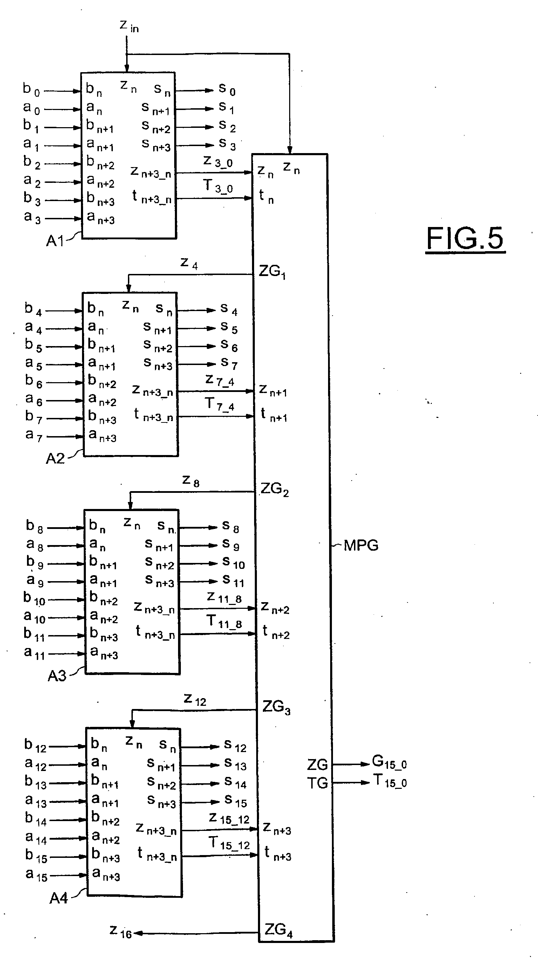

On se réfère à présent à la figure 5 qui représente un additionneur sur plusieurs niveaux et plus précisément un additionneur 16 bits avec propagation de retenue par groupe.

Ce type d'additionneur, réalisé de façon classique, est bien connu de l'homme du métier.

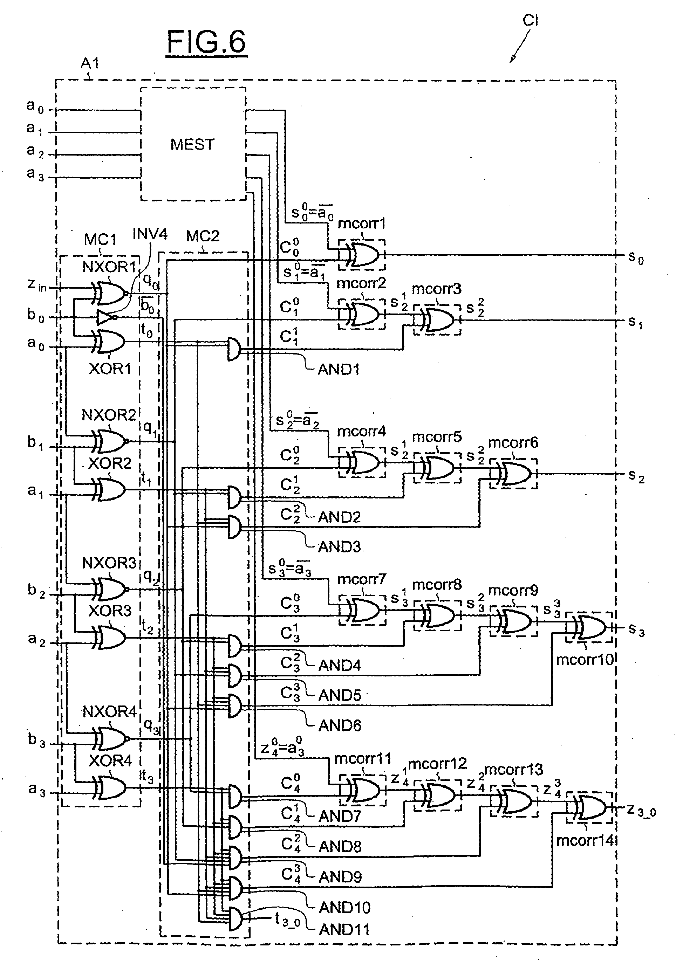

L'additionneur 16 bits SYS comprend quatre additionneurs $A_1$, $A_2$, $A_3$ et $A_4$ tels que décrits précédemment. Plus précisément, l'additionneur A1 est représenté sur la figure 6.

Le deuxième moyen de calcul MC2 de l'additionneur A1 comprend en plus de l'additionneur représenté sur la figure 1, une sortie supplémentaire apte à délivrer un signal de propagation par groupe $t_{3-0}$. Pour cela, le deuxième moyen de calcul MC2 comprend dans cet exemple une porte logique supplémentaire, ici une porte logique « ET » AND11, qui reçoit en entrée les signaux $t_0$, $t_1$, $t_2$ et $t_3$.

La porte logique AND10 a alors été modifiée et reçoit en entrée les signaux $t_3$, $t_2$, $t_1$, $t_0$ ainsi que le complémentaire du premier bit $b_0$ du deuxième nombre d'entrée B.

Le bit $b_0$ est délivré par le premier moyen de calcul MC1 qui comprend pour ce mode de réalisation un inverseur INV4 qui reçoit en entrée le premier bit $b_0$ du deuxième nombre binaire B et délivre en sortie son complémentaire $\overline{b_0}$.

On se réfère à nouveau à la figure 5. Le premier additionneur $A_1$ reçoit en entrée les signaux $b_0$, $a_0$,... , $b_3$, $a_3$, la retenue d'entrée $z_{in}$, et délivre en sortie les quatre premiers bits de la somme résultante $s_0$, ....$s_3$, la retenue résultante $z_4$ telle que définie dans la figure 6, ainsi que le signal de propagation par groupe $T_{3-0}$ dans le cas de l'additionneur A1. Ces signaux sont délivrés à un module de propagation par groupe MPG qui reçoit en entrée la retenue résultante $z_{3-0}$ du premier additionneur $A_1$, le signal de propagation par groupe $T_{3-0}$ et la retenue d'entrée $z_{in}$. Le module de propagation par groupe MPG élabore une nouvelle retenue $z_4$ définie par: $z_4 = z_{3-0} \oplus T_{3-0}.z_{in}$.

De même, les additionneurs $A_2$, $A_3$ et $A_4$ reçoivent respectivement les signaux d'entrée $b_4$, $a_4$, ...$b_7$, $a_7$ et $b_8$, $a_8$, ...$b_{11}$, $a_{11}$ et $b_{12}$, $a_{12}$, ..., $b_{15}$, $a_{15}$, ainsi que les retenues résultantes $z_4$, $z_8$ et $z_{12}$ élaborées par le module de propagation MPG.

L'additionneur $A_2$ délivre en sortie les bits $s_4$, ... $s_7$ de la somme S, l'additionneur A3 délivre les bits de sortie $s_8$, ..., $s_{11}$ et l'additionneur $A_4$ délivre les bits de la somme $s_{12}$, ..., $s_{15}$.

Le module MPG génère une retenue résultante $z_{16}$ tel que :

$$z_{16} = z_{15-12} \oplus T_{15-12}.z_{11-8} \oplus T_{15-12}.T_{11-8}.z_{7-4} \oplus T_{15-12}.T_{11-8}.T_{7-4}.z_{3-0} \oplus T_{15-12}.T_{11-8}.T_{7-4}.z_{3-0}$$
$$\oplus T_{15-12}.T_{11-8}.T_{7-4}.T_{3-0}.z_{in}$$

ainsi qu'un signal de propagation par groupe $z_9$ tel que :

$$z_G = z_{15-12} \oplus T_{15-12}.z_{11-8} \oplus T_{15-12}.T_{11-8}.z_{7-4} \oplus T_{15-12}.T_{11-8}.T_{7-4}.z_{3-0}$$

et un signal de propagation par groupe $T_G$ calculé selon l'expression suivante :

$$T_G = T_{15-0} = T_{15-12}.T_{11-8}.T_{7-4}.T_{3-0}.$$

Les signaux $z_G$ et $T_G$ correspondent respectivement aux signaux de génération et de propagation par groupe de l'ensemble des additionneurs A1,..., A4.

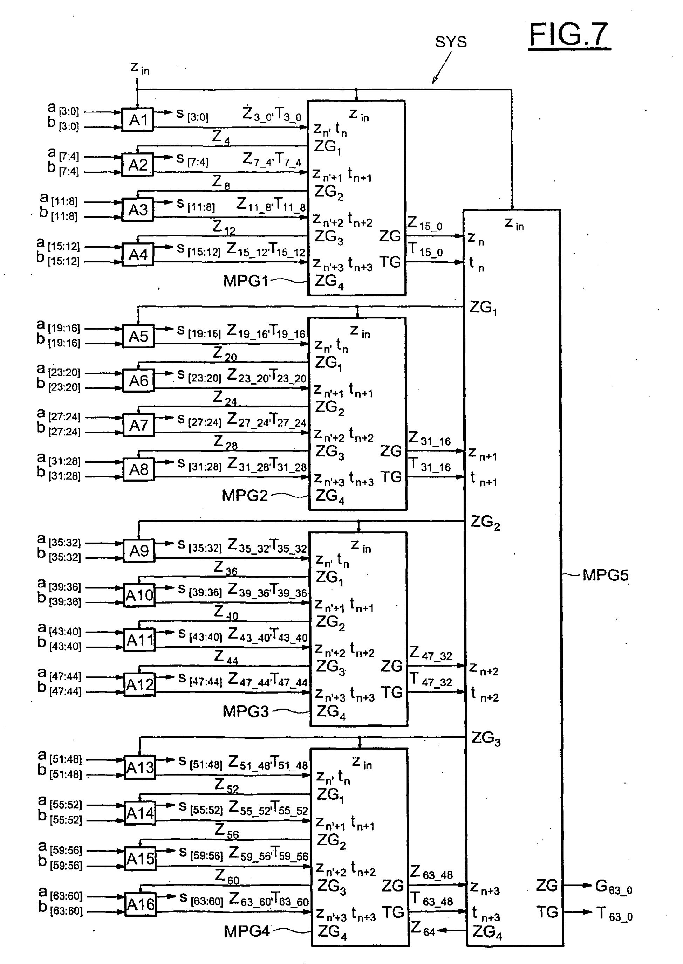

La figure 7 représente également un additionneur avec propagation de la retenue par groupe recevant en entrée 64, bits. Ce type d'additionneur bien connu de l'homme du métier peut être utilisé avec les additionneurs tels que décrits sur la figure 6 ainsi que deux niveaux de modules de propagation par groupe.

Le système SYS comprend un premier niveau constitué de quatre modules de propagation par groupe MPG1, MPG2, MPG3 et MPG4. Chaque module de propagation par groupe est connecté à quatre additionneurs, respectivement A1, ..., $A_4$ et $A_5$, ..., $A_8$ et $A_9$, ...$A_{12}$ et $A_{13}$, ..., $A_{16}$.

Le deuxième niveau de module de propagation par groupe comprend un module MPG5 qui reçoit en entrée les signaux de sortie délivrés par chaque module de propagation par groupe du premier niveau.

L'additionneur tel que décrit ci-avant peut être utilisé à la place d'un additionneur classique 64 bits, avec propagation de retenue par groupe dans toutes les configurations.

**Revendications**

1.  Additionneur n bits d'un premier et d'un deuxième nombre binaire, comprenant un premier moyen de calcul (MC1) avec 2n entrées pour recevoir les n valeurs de bits desdits premier et deuxième nombres binaires et une entrée supplémentaire pour recevoir une retenue d'entrée ($z_{in}$), ledit premier moyen de calcul (MC1) étant apte à élaborer à partir de chacune des n paires de valeurs de bits de même rang, un signal de propagation de retenue ($t_n$),

    **caractérisé en ce que** le premier moyen de calcul (MC1) est apte à élaborer en outre n signaux de génération diagonale ($q_n$), chaque signal de génération diagonale étant élaboré à partir de la valeur du bit de rang k du deuxième nombre, k variant entre 0 et n-1, et de la valeur du bit de rang k-1 du premier nombre ou de la retenue d'entrée si ledit coefficient de rang k-1 n'existe pas, le signal de génération diagonale ($q_n$) de rang k étant déterminé selon l'expression suivante :

$$q_k = \overline{(b_k \oplus a_{k-1})}$$

    où :

    - $q_k$ est le signal de génération diagonale de rang k,
    - $b_k$ est le bit de rang k du deuxième nombre binaire,
    - $a_{k-1}$ est le bit de rang k-1 du premier nombre binaire,

    et **en ce que** l'additionneur comprend en outre :

    - un moyen d'estimation (MEST) apte à effectuer une première estimation de chaque coefficient du nombre résultant de la somme du premier et du deuxième nombres, en prenant le complémentaire de la valeur du bit de rang correspondant du premier nombre,
    - un deuxième moyen de calcul (MC2) connecté au premier moyen de calcul (MC1) et apte à élaborer un ensemble de signaux de correction à partir des signaux de propagation et des signaux de génération diagonale, le p$^{ième}$ signal de correction du bit de rang k, avec p variant entre 0 et n-1, étant déterminé selon l'expression suivante :

$$C_k^p = q_k, \text{ si } p = 0,$$

$$C_k^p := \left[\prod_{i=1}^{p} t_{k-i}\right] \cdot q_{k-p} \text{ sinon,}$$

ou :

- $C_k^p$ est le p$^{ième}$ signal de correction du bit de rang k de la somme résultante,
- $t_i$ est le signal de propagation de retenue élaboré à partir des bits de rang i des premier et deuxième nombres binaires,
- $q_k$ est le signal de génération diagonale de rang k,

- un bloc de correction (mcorr1, ..., mcorr14) comprenant n sorties et apte à appliquer à chaque valeur de bit estimée de rang k de ladite somme, k+1 corrections à l'aide desdits signaux de correction, et à délivrer en sortie les n bits de la somme des premier et deuxième nombres.

2. Additionneur selon la revendication 1, dans lequel le moyen d'estimation (MEST) est apte en outre à effectuer une première estimation d'une retenue résultant ($z_4$) de ladite somme du premier et du deuxième nombres, à partir du bit de poids fort du premier nombre,
dans lequel le deuxième moyen de calcul (MC2) est apte en outre à élaborer un ensemble de signaux supplémentaires de correction de ladite retenue résultante, à partir des signaux de propagation et des signaux de génération diagonale, et
dans lequel le bloc de correction (mcorr1, ..., mcorr14) comprend en outre une sortie supplémentaire pour délivrer ladite retenue résultante, et est apte à appliquer à la valeur de bit estimée de la retenue résultante, k+1 corrections à l'aide desdits signaux de correction supplémentaires.

3. Additionneur selon l'une des revendications précédentes, dans lequel le bit de rang k de la somme résultante est déterminé selon l'expression suivante

$$s_k = \overline{a}_k \oplus \sum_{i=0}^{k} C_k^i$$

où :

- $s_k$ est le bit de rang k de la somme résultante,
- $a_k$ est le bit de rang k du premier nombre binaire,
- $C_k^i$ est le i$^{ième}$ signal de correction du bit de sang k de la somme résultante.

4. Additionneur selon l'une des revendications précédentes, dans lequel le premier moyen de calcul (MC1) comprend n paires de portes « OU EXCLUSIF » (XOR1, ..., XOR4) et « complément du OU EXCLUSIF » (NXOR1, ..., NXOR4) tel que pour la k$^{ième}$ paire, la porte « complément du OU EXCLUSIF » est apte à recevoir en entrée le bit de rang k du deuxième nombre binaire et le bit de rang k-1 du premier nombre binaire ou la retenue d'entrée si ledit bit du premier nombre binaire de rang k-1 n'existe pas, et apte à délivrer en sortie le signal de génération diagonale correspondant, et tel que pour ladite k$^{ième}$ paire, la porte « OU EXCLUSIF » est apte à recevoir les bits de rang k du premier et du deuxième nombres binaires et est apte à délivrer le signal de propagation de retenue de rang correspondant.

5. Additionneur selon l'une des revendications précédentes, dans lequel le deuxième moyen de calcul (MC2) comprend pour l'élaboration de chaque signal de correction du bit de rang k, k portes « ET » (AND1, ..., AND10), la i$^{ième}$ porte étant apte à élaborer un signal de correction à partir des signaux de propagation de retenue et de génération de retenue délivrés en entrée desdites portes « ET »,

**6.** Additionneur selon l'une des revendications précédentes, dans lequel le bloc de correction comprend pour l'élaboration du bit de rang k de la somme résultante k+1 portes « OU EXCLUSIF » connectées en série, chaque porte étant apte :

- à recevoir le bit de rang k estimé ou le bit de rang k délivré par la porte « OU EXCLUSIF » connectée en amont, et un signal de correction,
- à effectuer une correction sur le signal reçu en entrée à partir dudit signal de correction reçu.

**7.** Système d'addition de j bits, tel que j est supérieur à 2, comprenant j-1 additionneurs (ADD1, ADD2) selon l'une des revendications 1 à 6 et connectés en série, chaque additionneur étant apte à recevoir en entrée un premier nombre binaire et un deuxième nombre binaire correspondant à la somme de deux autres nombres binaires, qui est la somme délivrée par l'additionneur connecté en amont.

**8.** Système d'addition de j bits, tel que j est supérieur à 2, comprenant un ensemble d'additionneurs (A1, ..., A4) selon l'une des revendications 2 à 6 connectés en parallèle, dans lequel ledit deuxième moyen de calcul de chaque additionneur :

- comprend en outre une sortie apte à délivrer un signal de propagation ($t_n$) par groupe correspondant au produit de l'ensemble des signaux de propagation de retenue ($q_n$), élaborés par ledit premier moyen de calcul (MC1),
- est apte à élaborer ledit ensemble de signaux supplémentaires de correction de ladite retenue résultante, à partir des signaux de propagation ($t_n$) et des signaux de génération diagonale ($q_n$), ainsi que du signal complémentaire du premier bit du deuxième nombre binaire d'entrée,

le système comprenant en outre au moins un module de propagation (MPG) par groupe connecté à l'ensemble des additionneurs et apte à recevoir ladite retenue résultante et ledit signal de propagation par groupe ($t_n$) élaboré par chaque additionneur et à élaborer d'une part la retenue d'entrée d'un additionneur à partir de la retenue résultante et du signal de propagation par groupe de l'additionneur précédent, et d'autre part une nouvelle retenue résultante et un nouveau signal de propagation par groupe à partir des retenues résultantes et des signaux de propagation par groupe de l'ensemble des additionneurs.

**9.** Système selon la revendication 8, comprenant un premier ensemble de modules de propagation (MPG1, ..., MPG4) connectés en parallèle à la sortie des additionneurs, et un autre module de propagation (MPG5), connecté à la sortie dudit premier ensemble de modules de propagation, apte à recevoir la nouvelle retenue résultante et le nouveau signal de propagation par groupe de chaque module de propagation dudit premier ensemble, et apte à élaborer à partir de chaque nouvelle retenue résultante et de chaque nouveau signal de propagation par groupe, une nouvelle retenue de sortie et un nouveau signal de propagation par groupe de sortie.

**10.** Procédé d'addition d'un premier et d'un deuxième nombre binaire de n bits dans un additionneur comprenant les moyens respectifs exécutant les phase dudit procédé d'addition, ledit procédé d'addition comprenant une phase de réception (étape 10) des n valeurs de bits desdits premier et deuxième nombres binaires et d'une retenue d'entrée ($z_{in}$), et une première phase de calcul (étape 12) comprenant l'élaboration à partir de chacune des n paires de valeurs de bits de même rang, d'un signal de propagation de retenue ($t_n$), **caractérisé en ce que** la première phase de calcul (étape 12) comprend en outre l'élaboration de n signaux de génération diagonale ($q_n$), chaque signal de génération diagonale ($q_n$) étant élaboré à partir de la valeur du bit de rang k du deuxième nombre, k variant entre 0 et n-1, et de la valeur du bit de rang k-1 du premier nombre ou de la retenue si ledit coefficient de rang k-1 n'existe pas, le signal de génération diagonale ($q_n$) de rang k étant déterminé selon l'expression suivante :

$$q_k = \overline{(b_k \oplus a_{k-1})}$$

où :

- $q_k$ est le signal de génération diagonale de rang k,
- $b_k$ est le bit de rang k du deuxième nombre binaire,
- $a_{k-1}$ est le bit de rang k-1 du premier nombre binaire,

et **en ce que** le procédé comprend en outre :

- une phase d'estimation (étape 11) de chaque coefficient du nombre résultant de la somme du premier et du deuxième nombres, en prenant le complémentaire de la valeur du bit de rang correspondant du premier nombre,
- une deuxième phase de calcul (étape 13) comprenant l'élaboration d'un ensemble de signaux de correction à partir des signaux de propagation et des signaux de génération diagonale, le p$^{\text{ième}}$ signal de correction du bit de rang k, avec p variant entre 0 et n-1, étant déterminé selon l'expression suivante :

$$C_k^p = q_k, \text{ si } p = 0,$$

$$C_k^p = \left[ \prod_{i=1}^{p} t_{k-i} \right] \cdot q_{k-p} \text{ sinon,}$$

où :

- $C_k^p$ est le p$^{\text{ième}}$ signal de correction du bit de rang k de la somme résultante,
- $t_i$ est le signal de propagation de retenue élaboré à partir des bits de rang i des premier et deuxième nombres binaires,
- $q_k$ est le signal de génération diagonale de rang k,

- une phase de correction (étape 14) comprenant l'application à chaque valeur de bit estimée de rang k de ladite somme, de k+1 corrections à l'aide desdits signaux de correction, et la délivrance en sortie des n bits de la somme des premiers et deuxième nombres.

**11.** Procédé selon la revendication 10, dans lequel la phase d'estimation comprend en outre une première estimation d'une retenue résultant ($z_4$) de ladite somme du premier et du deuxième nombres, à partir du dernier bit du premier nombre,

dans lequel la deuxième phase de calcul comprend en outre l'élaboration d'un ensemble de signaux supplémentaires de correction de ladite retenue résultante, à partir des signaux de propagation ($t_n$) et des signaux de génération diagonale (qn), et

dans lequel la phase de correction comprend en outre la délivrance de ladite retenue résultante, et l'application à la valeur de bit estimée de la retenue résultante, k+1 corrections à l'aide desdits signaux de correction supplémentaires.

**12.** Procédé selon l'une des revendications 10 et 11, dans lequel le bit de rang k de la somme résultante est déterminé selon l'expression suivante :

$$s_k = \overline{a}_k \oplus \sum_{i=0}^{k} C_k^i \, ,$$

où :

- $s_k$ est le bit de rang k de la somme résultante,
- $a_k$ est le bit de rang k du premier nombre binaire,

- $C_k^i$ est le i$^{\text{ième}}$ signal de correction du bit de rang k de la somme résultante.

**13.** Procédé selon l'une des revendications 10 à 12, dans lequel la première phase de calcul comprend n paires d'opérations « OU EXCLUSIF » et « complément du OU EXCLUSIF » tel que pour la k$^{\text{ième}}$ paire d'opération, l'opération « complément du OU EXCLUSIF » comprend la réception en entrée du bit de rang k du deuxième nombre binaire et du bit de rang k-1 du premier nombre binaire ou de la retenue si ledit bit de rang k-1 du premier nombre binaire n'existe pas, et comprend la délivrance en sortie du signal de génération diagonale correspondant, et tel que pour ladite k[ième] paire d'opérations, l'opération « OU EXCLUSIF » comprend la réception des bits de rang k du premier et du deuxième nombres binaires et la délivrance du signal de propagation de retenue de rang correspondant.

**14.** Procédé selon l'une des revendications 10 à 13, dans lequel la deuxième phase de calcul comprend pour l'élaboration de chaque signal de correction du bit de rang k, k opérations « ET », la i[ème] opération comprenant l'élaboration d'un signal de correction à partir des signaux de propagation de retenue et de génération de retenue.

**15.** Procédé selon l'une des revendications 10 à 14, dans lequel la phase de correction comprend pour l'élaboration du bit de rang k de la somme résultante, k+1 opérations « OU EXCLUSIF » en série, comprenant la réception du bit de rang k estimé ou du bit de rang k traité lors de la précédente opération « OU EXCLUSIF » de la phase de correction, et un signal de correction, chaque opération « OU EXCLUSIF » comprenant la correction du signal reçu en entrée, à partir dudit signal de correction.

**Claims**

**1.** n-bit adder of a first and second binary number, comprising a first calculation means (MC1) with 2n inputs for receiving the n values of bits of said first and second binary numbers and an additional input for receiving an input carry ($z_{in}$), said first calculation means (MC1) being able to produce, from each of the n pairs of bit values of the same rank, a carry propagation signal ($t_n$),
**characterised in that** the first calculation means (MC1) is able furthermore to produce n diagonal-generation signals ($q_n$), each diagonal-generation signal being produced from the value of the bit of rank k of the second number, k varying between 0 and n-1, and the value of the bit of rank k-1 of the first number or of the input carry if said coefficient of rank k-1 does not exist, the diagonal generation signal ($q_n$) of rank k is determined according to the following expression:

$$q_k = \overline{\left( b_k \oplus a_{k-1} \right)}$$

where:

- $q_k$ is the diagonal-generation signal of rank k,
- $b_k$ is the bit of rank k of the second binary number,
- $a_{k-1}$ is the bit of rank k-1 of the first binary number,

and **in that** the adder further comprises:

- an estimation means (MEST) able to perform a first estimation of each coefficient of the number resulting from the sum of the first and second numbers, taking the complementary of the value of the bit of corresponding rank of the first number,
- a second calculation means (MC2) connected to the first calculation means (MC1) and able to produce a set of correction signals from the propagation signals and diagonal-generation signals, the pth correction signal of the bit of rank k, with p varying between 0 and n-1, is determined according to the following expression:

$$C_k^p = q_k \ \text{if} \ p = 0$$

$$C_k^p = \left[ \prod_{i=1}^{p} t_{k-i} \right] \cdot q_{k-p}$$

otherwise,
where:

- $C_k{}^p$ is the $p^{th}$ correction signal of the bit of rank k of the resulting sum,
- $t_i$ is the carry propagation signal produced from the bits of rank i of the first and second binary numbers,
- $q_k$ is the diagonal-generation signal of rank k,

- a correction block (mcorr1, ..., mcorr14) comprising n outputs and able to apply, to each estimated bit value of rank k of said sum, k+1 corrections by means of said correction signals, and to deliver as an output the n bits of the sum of the first and second numbers.

2. Adder according to claim 1, in which the estimation means (MEST) is furthermore able to perform a first estimation of a resulting carry ($z_4$) of said sum of the first and second numbers, from the most significant bit of the first number, in which the second calculation means (MC2) is furthermore able to produce a set of supplementary signals correcting said resulting carry, from the propagation signals and diagonal-generation signals, and
in which the correction block (mcorr1, ..., mcorr14) furthermore comprises an additional output for delivering said resulting carry, and is able to apply, to the estimated bit value of the resulting carry, k+1 corrections by means of said supplementary correction signals.

3. Adder according to one of the preceding claims, in which the bit of rank k of the resulting sum is determined according to the following expression:

$$s_k = \overline{a_k} \oplus \sum_{i=0}^{k} C_k^i$$

,

where:

- $S_k$ is the bit of rank k of the resulting sum,
- $a_k$ is the bit of rank k of the first binary number,
- $C_k1$ is the $i^{th}$ correction signal of the bit of rank k of the resulting sum.

4. Adder according to one of the preceding claims, in which the first calculation means (MC1) comprises n pairs of "EXCLUSIVE OR" gates (XOR1, ..., XOR4) and "EXCLUSIVE OR complement" gates (NXOR1, ..., NXOR4) such that, for the $k^{th}$ pair, the "EXCLUSIVE OR complement" gate is able to receive as an input the bit of rank k of the second binary number and the bit of rank k-1 of the first binary number or the input carry if said bit of the first binary number of rank k-1 does not exist, and able to deliver the corresponding diagonal-generation signal as an output, and such that, for said $k^{th}$ pair, the "EXCLUSIVE OR" gate is able to receive the bits of rank k of the first and second binary numbers and is able to deliver the carry propagation signal of corresponding rank.

5. Adder according to one of the preceding claims, in which the second calculation means (MC2) comprises, for producing each correction signal of the bit of rank k, k "AND" gates (AND1, ... AND10), the $i^{th}$ gate being able to produce a correction signal from the carry propagation and carry generation signals delivered as an input to said "AND" gates.

6. Adder according to one of the preceding claims, in which the correction block comprises, for producing the bit of rank k of the resulting sum, k+1 "EXCLUSIVE OR" gates connected in series, each gate being able to :

- receive the estimated bit of rank k or the bit of rank k delivered by the "EXCLUSIVE OR" gate connected upstream, and a correction signal,
- perform a correction to the signal received as an input from said correction signal received.

7. System for adding j bits, such that j is greater than 2, comprising j-1 adders (ADD1, ADD2) according to one of claims 1 to 6 and connected in series, each adder being able to receive as an input a first binary number and a second binary number corresponding to the sum of two other binary numbers, which is delivered by the adder connected upstream.

8. System for adding j bits, such that j is greater than 2, comprising a set of adders (A1, ..., A4) according to one of claims 2 to 6 connected in parallel, in which said second calculation means of each adder:

   - furthermore comprises an output able to deliver a group propagation signal ($t_n$) corresponding to the product of all the carry propagation signals ($q_n$), produced by said first calculation means (MC1),
   - is able to produce said set of supplementary signals for correcting said resulting carry, from the propagation signals ($t_n$) and the diagonal-generation signals ($q_n$), as well as the complementary signal of the first bit of the second input binary number,

   the system furthermore comprising at least one group propagation module (MPG) connected to all the adders and able to receive the said resulting carry and the said group propagation signal ($t_n$) produced by each adder and to produce firstly the input carry of an adder from the resulting carry and the group propagation signal of the previous adder, and secondly a new resulting carry and a new group propagation signal from the resulting carries and group propagation signals of all the adders.

9. System according to claim 8, comprising a first set of propagation modules (MPG1, ... MPG4) connected in parallel to the outlet of the adders, and another propagation module (MPG5) connected to the output of the said first set of propagation modules, able to receive the new resulting carry and the new group propagation signal of each propagation module of said first set, and able to produce, from each new resulting carry and each new group propagation signal, a new output carry and a new output group propagation signal.

10. Method of adding a first and second n-bit binary number in an adder comprising the respective means for executing the phases of said method of adding, said method of adding comprising a phase (step 10) of receiving the n bit values of the said first and second binary numbers and an input carry ($z_{in}$), and a first calculation phase (step 12) comprising the production, from each of the n pairs of values of bits of the same rank, of a carry propagation signal ($t_n$), **characterised in that** the first calculation phase (step 12) furthermore comprises the production of n diagonal-generation signals ($q_n$), each diagonal generation signal ($q_n$) being produced from the value of the bit of rank k of the second number, k varying between 0 and n-1, and the value of the bit of rank k-1 of the first number or of the carry if said coefficient of rank k-1 does not exist, the diagonal-generation signal of rank k ($q_k$) is determined according to the following expression:

$$q_k = \overline{\left( b_k \oplus a_{k-1} \right)}$$

where:

   - $q_k$ is the diagonal-generation signal of rank k,
   - $b_k$ is the bit of rank k of the second binary number,
   - $a_{k-1}$ is the bit of rank k-1 of the first binary number,

and **in that** the method further comprises:

   - a phase (step 11) of estimating each coefficient of the number resulting from the sum of the first and second numbers, taking the complementary of the value of the bit of corresponding rank of the first number,
   - a second calculation phase (step 13) comprising the production of a set of correction signals from the propagation signals and diagonal-generation signals, the $p^{th}$ correction signal of the bit of rank k, with p varying between 0 and n-1, is determined according to the following expression:

$$C_k^p = q_k \text{ if } p = 0$$

$$C_k^p = \left[ \prod_{i=1}^{p} t_{k-i} \right] \cdot q_{k-p}$$

otherwise,
where:

- $C_k^p$ is the $p^{th}$ correction signal of the bit of rank k of the resulting sum,
- $t_i$ is the carry propagation signal produced from the bits of rank i of the first and second binary numbers,
- $q_k$ is the diagonal-generation signal of rank k,

- a correction phase (step 14) comprising the application, to each estimated bit value of rank k of said sum, of k+1 corrections using said correction signals, and the delivery as an output of the n bits of the sum of the first and second numbers.

11. Method according to claim 10, in which the estimation phase furthermore comprises a first estimation of a resulting carry ($z_4$) of said sum of the first and second numbers, from the last bit of the first number,
in which the second calculation phase furthermore comprises the production of set of supplementary signals for correction of said resulting carry, from the propagation signals ($t_n$) and diagonal-generation signals (qn), and
in which the correction phase furthermore comprises the delivery of the said resulting carry, and the application, to the estimated bit value of the resulting carry, of k+1 corrections using said supplementary correction signals.

12. Method according to one of claims 10 and 11, in which the bit of rank k of the resulting sum is determined according to the following expression:

$$S_k = \overline{a_k} \oplus \sum_{i=0}^{k} C_k^i$$

where:

- $S_k$ is the bit of rank k of the resulting sum,
- $a_k$ is the bit of rank k of the first binary number,
- $C_k^i$ is the $i^{th}$ correction signal of the bit of rank k of the resulting sum.

13. Method according to one of claims 10 to 12, in which the first calculation phase comprises n pairs of "EXCLUSIVE OR" and "EXCLUSIVE OR complement" operations such that, for the $k^{th}$ pair of operations, the "EXCLUSIVE OR complement" operation comprises the reception as an input of the bit of rank k of the second binary number and of the bit of rank k-1 of the first binary number or of the carry if said bit of rank k-1 of the first binary number does not exist, and comprises the delivery as an output of the corresponding diagonal-generation signal, and such that, for said $k^{th}$ pair of operations, the "EXCLUSIVE OR" operation comprises the reception of the bits of rank k of the first and second binary numbers and the delivery of the carry propagation signal of corresponding rank.

14. Method according to one of claims 10 to 13, in which the second calculation phase comprises, for producing each correction signal of the bit of rank k, k "AND" operations, the $i^{th}$ operation comprising the production of a correction signal from the carry propagation and carry generation signals.

15. Method according to one of claims 10 to 14, in which the correction phase comprises, for the production of the bit of rank k of the resulting sum, k+1 "EXCLUSIVE OR" operations in series, comprising the reception of the estimated bit of rank k or of the bit of rank k processed during the preceding "EXCLUSIVE OR" operation of the correction phase, and a correction signal, each "EXCLUSIVE OR" operation comprising the correction of the signal received as an input, from said correction signal.

**Patentansprüche**

1. n-bit-Addierer einer ersten und einer zweiten Binärzahl, mit einem ersten Rechenmittel (MC1) mit 2n Eingängen zum Empfangen der n Bitwerte der ersten und der zweiten Binärzahl, und einem zusätzlichen Eingang zum Empfangen eines Eingangsübertrags ($z_{in}$), wobei das erste Rechenmittel (MC1) im Stande ist, ausgehend von jedem der n Paare von Bitwerten desselben Rangs ein Übertragsfortpflanzungssignal ($t_n$) zu erzeugen, **dadurch gekennzeichnet, dass** das erste Rechenmittel (MC1) geeignet ist, zusätzlich n Diagonalgenerierungssignale ($q_n$) zu erzeugen, wobei jedes Diagonalgenerierungssignal ausgehend von dem Wert des Bits des Rangs k der zweiten Zahl, wobei k zwischen 0 und n-1 variiert, und dem Wert des Bits des Rangs k-1 der ersten Zahl oder des Eingangsübertrags, falls der besagte Koeffizient des Rangs k-1 nicht existiert, generiert wird, wobei das Diagonalgenerierungssignal ($q_n$) des Rangs k gemäß der folgenden Gleichung bestimmt ist:

$$q_k = \overline{(b_k \oplus a_{k-1})}$$

wobei:

- $q_k$ das Diagonalgenerierungssignal des Rangs k ist,
- $b_k$ das Bit des Rangs k der zweiten Binärzahl ist,
- $a_{k-1}$ das Bit des Rangs k-1 der ersten Binärzahl ist,

und **dadurch**, dass der Addierer zusätzlich aufweist:

- ein Schätzmittel (MEST), das zum Bewirken einer ersten Schätzung jedes Koeffizienten der aus der Summe der ersten und der zweiten Zahl resultierenden Zahl geeignet ist, wobei der Komplementärwert des Werts des Bits des entsprechenden Rangs der ersten Zahl herangezogen wird,
- ein zweites Rechenmittel (MC2), das mit dem ersten Rechenmittel (MC1) verbunden und geeignet ist, eine Gesamtheit von Korrektursignalen ausgehend von den Fortpflanzungssignalen und den Diagonalgenerierungssignalen zu erstellen, wobei das p-te Korrektursignal des Bits des Rangs k gemäß der folgenden Gleichung bestimmt wird, wobei p zwischen 0 und n-1 variiert

$$C_k^p = q_k ,$$

wenn p = 0

$$C_k^p = \left[ \prod_{i=1}^{p} t_{k-i} \right] \cdot q_{k-p} ,$$

wenn nicht,
wobei:

- $C_k^p$ das p-te Korrektursignal des Bits des Rangs k der resultierenden Summe ist,
- $t_i$ das ausgehend von den Bits des Rangs i der ersten und der zweiten Binärzahl erarbeitete Übertragsfortpflanzungssignal ist,
- $q_k$ das Diagonalgenerierungssignal des Rangs k ist,

- ein n Ausgänge enthaltender Korrekturblock (mcorr1, ..., mcorr14) fähig ist, auf jeden geschätzten Bitwert des Rangs k der besagten Summe k+1 Korrekturen mit Hilfe der besagten Korrektursignale auszuführen und am Ausgang die n Bits der Summe aus der ersten und der zweiten Zahl bereit zu stellen.

**2.** Addierer gemäß Anspruch 1, bei dem das Schätzmittel (MEST) weithin fähig ist, eine erste Schätzung eines Übertrags ($z_4$), der aus der besagten Summe aus der ersten und der zweiten Zahl resultiert, ausgehend von den höherwertigen Bits der ersten Zahl vorzunehmen,

bei dem das zweite Rechenmittel (MC2) weiterhin fähig ist, eine Gesamtheit der zusätzlichen Korrektursignale des besagten resultierenden Übertrags, ausgehend von den Fortpflanzungssignalen und den Diagonalgenerierungssignalen bereit zu stellen, und

bei dem der Korrekturblock (mcorr1, ..., mcorr14) weiterhin einen zusätzlichen Ausgang zum Liefern des besagten Übertragsergebnisses aufweist und dazu ausgelegt ist, auf den geschätzten Bitwert des resultierenden Übertrags k+1 Korrekturen mit Hilfe der besagten zusätzlichen Korrektursignale auszuüben.

**3.** Addierer gemäß einem der vorhergehenden Ansprüche, bei dem das Bit des Rangs k der resultierenden Summe gemäß der folgenden Gleichung bestimmt wird:

$$s_k = \overline{a_k} \oplus \sum_{i=0}^{k} C_k^i$$

wobei:

- $S_k$ das Bit des Rangs k der resultierenden Summe ist,
- $a_k$ das Bit des Rangs k der ersten Binärzahl ist,

- $C_k^i$ das i-te Korrektursignal des Bits des Rangs k der resultierenden Summe ist .

**4.** Addierer gemäß einem der vorhergehenden Ansprüche, bei dem das erste Rechenmittel (MC1) n Paare von EXKLUSIV-ODER-Gliedern (XOR1, ..., XOR4) und EXKLUSIV-ODER-Komplement-Gliedern (NXOR1, ..., NXOR4) aufweist, derart, dass für das k-te Paar das EXKLUSIV-ODER-Komplement-Glied fähig ist, am Eingang das Bit des Rangs k der zweiten Binärzahl und das Bit des Rangs k-1 der ersten Binärzahl oder, falls das besagte Bit der ersten Binärzahl des Rangs k-1 nicht existiert, den Eingangsübertrag zu empfangen, und fähig ist, am Ausgang das entsprechende Diagonalgenerierungssignal bereit zu stellen, und derart, dass das EXKLUSIV-ODER-Glied fähig ist, für das k-te Paar die Bits des Rangs k der ersten und der zweiten Binärzahl aufzunehmen und fähig ist, das Übertragsfortpflanzungssignal des entsprechenden Rangs bereit zu stellen.

**5.** Addierer nach einem der vorhergehenden Ansprüche, bei dem das zweite Rechenmittel (MC2) für die Bereitstellung jedes Korrektursignals des Bits des Rangs k, k UND-Glieder (AND1, ..., AND10) aufweist, wobei das i-te Glied ausgelegt ist, ein Korrektursignal auf der Grundlage der Übertragsfortpflanzungssignale und der Erzeugung von an die Eingänge der besagten UND-Glieder angelegten Überträgen zu erzeugen.

**6.** Addierer gemäß einem der vorhergehenden Ansprüche, bei dem der Korrekturblock zur Ermittlung des Bits des Rangs k der resultierenden Summe k+1 EXKLUSIV-ODER-Glieder aufweist, die in Reihe geschaltet sind, wobei jedes Glied ausgelegt ist:

- das geschätzte Bit des Rangs k oder das von dem stromauf verschalteten EXKLUSIV-ODER-Glied gelieferte Bit des Rangs k, und ein Korrektursignal zu empfangen,
- eine Korrektur des am Eingang empfangenen Signals auf der Grundlage des empfangenen Korrektursignals zu bewirken.

**7.** Additionssystem für j Bits, wobei j größer ist als 2, mit j-1 Addierern (ADD1, ADD2) gemäß einem der Ansprüche 1 bis 6, die miteinander in Reihe geschaltet sind, wobei jeder Addierer dazu ausgelegt ist, am Eingang eine erste Binärzahl und eine zweite Binärzahl korrespondierend zu der Summe aus zwei anderen Binärzahlen, die die von dem stromauf verschalteten Addierer gelieferte Summe ist, zu empfangen.

**8.** Additionssystem für j Bits, wobei j größer ist als 2, das einen Satz von parallel geschalteten Addierern (A1, ..., A4) gemäß einem der Ansprüche 2 bis 6 aufweist, bei dem das besagte zweite Rechenmittel jedes Addierers:

- weiterhin einen Ausgang aufweist, der zur Lieferung eines Fortpflanzungssignals ($t_n$) je Gruppe entsprechend

dem Produkt der Gesamtheit der Übertragsfortpflanzungssignale ($q_n$), die durch das besagte erste Rechenmittel (MC1) ermittelt sind, ausgelegt ist,

- dazu ausgelegt ist, die besagte Gesamtheit der zusätzlichen Korrektursignale des besagten resultierenden Übertrags auf der Grundlage der Fortpflanzungssignale ($t_n$) und der Diagonalgenerierungssignale ($q_n$), ebenso wie des komplementären Signals des ersten Bits der zweiten eingangsseitigen Binärzahl zu ermitteln,

- wobei das System ferner mindestens ein Fortpflanzungsmodul (MPG) je Gruppe aufweist, das mit dem Satz von Addierern verbunden und dazu ausgelegt ist, den besagten resultierenden Übertrag und das besagte Fortpflanzungssignal je Gruppe ($t_n$), das von jedem Addierer gebildet wird, zu empfangen und einerseits den Übertrag für den Eingang eines Addierers auf der Grundlage des resultierenden Übertrags und des Fortpflanzungssignals je Gruppe des vorhergehenden Addierers, sowie andererseits einen neuen resultierenden Übertrag und ein neues Fortpflanzungssignal je Gruppe auf der Grundlage der resultierenden Überträge und der Fortpflanzungssignale je Gruppe des Satzes von Addierern zu bilden.

**9.** System nach Anspruch 8, das einen ersten Satz von Fortpflanzungsmodulen (MPG1, ..., MPG4), die parallel an den Ausgang der Addierer angeschlossen sind, und ein weiteres Fortpflanzungsmodul (MPG5) aufweist, das an den Ausgang des besagten ersten Satzes von Fortpflanzungsmodulen angeschlossen ist, zum Empfangen des neuen resultierenden Übertrags und des neuen Fortpflanzungssignals je Gruppe jedes Fortpflanzungsmoduls des besagten ersten Satzes, sowie zur Ermittlung eines neuen Ausgangsübertrags und eines neuen Fortpflanzungssignals je Ausgangsgruppe auf der Grundlage jedes neuen resultierenden Übertrags und jedes neuen Fortpflanzungssignals je Gruppe ausgelegt ist.

**10.** Verfahren zur Addition einer ersten und einer zweiten Binärzahl mit n Bit in einem Addierer, der die jeweiligen, die Phasen des besagten Additionsverfahrens ausführenden Mittel enthält, wobei das Additionsverfahren eine Phase des Empfangs (Etappe 10) von n Bitwerten der ersten und der zweiten Binärzahl und eines Eingangsübertrags ($z_{in}$), und eine erste Rechenphase (Etappe 12) aufweist, die die Bildung eines Übertragsfortpflanzungssignals ($t_n$) auf der Grundlage jedes von n Paaren des Werts von Bits des gleichen Rangs umfasst,

**dadurch gekennzeichnet, dass** die erste Rechenphase (Etappe 12) des weiteren die Ermittlung von n Diagonalgenerierungssignalen ($q_n$) umfasst, wobei jedes Diagonalgenerierungssignal ($q_n$) auf der Grundlage des Werts des Bits des Rangs k der zweiten Zahl, wobei k zwischen 0 und n-1 variiert, und des Werts des Bits des Rangs k-1 der ersten Zahl oder, wenn der besagte Koeffizient des Rands k-1 nicht existiert, des Übertrags gebildet wird, wobei das Diagonalgenerierungssignal ($q_n$) des Rangs k gemäß der folgenden Gleichung bestimmt wird:

$$q_k = \overline{(b_k \oplus a_{k-1})}$$

- $q_k$ das Diagonalgenerierungssignal des Rangs k ist,
- $b_k$ das Bit des Rangs k der zweiten Binärzahl ist,
- $a_{k-1}$ das Bit des Rangs k-1 der ersten Binärzahl ist,

und wobei das Verfahren weiterhin umfasst:

- eine Phase der Schätzung (Etappe 11) jedes Koeffizienten der aus der Summe der ersten und der zweiten Zahl resultierenden Zahl, wobei der Komplementärwert des Werts des Bits des der ersten Zahl korrespondierenden Rangs herangezogen wird,
- eine zweite Rechenphase (Etappe 13), die die Ermittlung eines Satzes von Korrektursignalen auf der Grundlage der Fortpflanzungssignale und der Diagonalgenerierungssignale umfasst, wobei das p-te Korrektursignal des Bits des Rangs k gemäß der folgenden Gleichung bestimmt wird, wobei p zwischen 0 und n-1 variiert:

$$C_k^p = q_k,$$

wenn p = 0,

$$C_k^p = \left[ \prod_{i=1}^p t_{k-i} \right] \cdot q_{k-p},$$

wenn nicht,
wobei:

- $C_k^p$ das p-te Korrektursignal des Bits des Rangs k der resultierenden Summe ist,

- $t_i$ das Übertragsfortpflanzungssignal ist, das auf der Grundlage der Bits des Rangs i der ersten und der zweiten Binärzahl ermittelt wird,
- $q_k$ das Diagonalgenerierungssignal des Rangs k ist,

- eine Korrekturphase (Etappe 14), die die Anwendung von k+1 Korrekturen auf jeden geschätzten Wert des Bits des Rangs k der besagten Summe mit Hilfe der besagten Korrektursignale, sowie die Lieferung der n Bits der Summe aus der ersten und der zweiten Zahl am Ausgang umfasst.

**11.** Verfahren nach Anspruch 10, bei dem die Schätzphase weiterhin eine erste Schätzung eines resultierenden Übertrags ($z_4$) der besagten Summe aus der ersten und der zweiten Zahl auf der Grundlage des letzten Bits der ersten Zahl enthält,
bei dem die zweite Rechenphase weiterhin die Bildung eines Satzes von zusätzlichen Korrektursignalen des besagten resultierenden Übertrags auf der Grundlage der Fortpflanzungssignale ($t_n$) und der Diagonalgenerierungssignale ($q_n$) enthält, und
bei dem die Korrekturphase ferner die Lieferung des besagten resultierenden Übertrags und die Anwendung von k+1 Korrekturen auf den geschätzten Wert des Bits des resultierenden Übertrags unter Zuhilfenahme der besagten zusätzlichen Korrektursignale enthält.

**12.** Verfahren gemäß einem der Ansprüche 10 und 11, bei dem das Bit des Rangs k der resultierenden Summe gemäß der folgenden Gleichung bestimmt wird:

$$s_k = \overline{a}_k \oplus \sum_{i=0}^k C_k^i,$$

wobei:

- $S_k$ das Bit des Rangs k der resultierenden Summe ist,
- $a_k$ das Bit des Rangs k der ersten Binärzahl ist,

- $C_k^i$ das i-te Signal der Korrektur des Bits des Rangs k der resultierenden Summe ist.

**13.** Verfahren nach einem der Ansprüche 10 bis 12, bei dem die erste Rechenphase n Paare von EXKLUSIV-ODER-Operationen und komplementären EXKLUSIV-ODER-Operationen derart enthält, dass für das k-te Operationspaar die komplementäre EXKLUSIV-ODER-Operation den eingangsseitigen Empfang des Bits des Rangs k der zweiten Binärzahl und des Bits des Rangs k-1 der ersten Binärzahl oder, wenn das besagte Bit des Rangs k-1 der ersten Binärzahl nicht vorhanden ist, des Übertrags umfasst und die Lieferung des entsprechenden Diagonalgenerierungssignals am Ausgang enthält, und derart, dass die EXKLUSIV-ODER-Operation für das besagte k-te Operationspaar den Empfang der Bits des Rangs k der ersten und der zweiten Binärzahl und die Lieferung des Übertragsfortpflanzungssignals des entsprechenden Rangs umfasst.

**14.** Verfahren nach einem der Ansprüche 10 bis 13, bei dem die zweite Rechenphase für die Bildung jedes Korrektursignals des Bits des Rangs k UND-Verknüpfungen enthält, wobei die i-te Operation die Bildung eines Korrektursignals auf der Grundlage der Übertragsfortpflanzungssignale und der Übertragsgenerierungssignale umfasst.

**15.** Verfahren gemäß einem der Ansprüche 10 bis 14, bei dem die Korrekturphase für die Bildung des Bits des Rangs

**27**

k der resultierenden Summe k+1 EXKLUSIV-ODER-Verknüpfungen in Serie umfasst, die den Empfang des geschätzten Bits des Rangs k oder des gemäß der vorhergehenden EXKLUSIV-ODER-Verknüpfung der Korrekturphase behandelten Bits des Rangs k, und eines Korrektursignals umfasst, wobei jede EXKLUSIV-ODER-Verknüpfung die Korrektur des am Eingang empfangenen Signals auf der Grundlage des besagten Korrektursignals umfasst.

FIG.1

EP 1 924 904 B1

## FIG.2

$s_0^0, s_1^0, s_2^0, s_3^0, z_4^0$

$t_0, ..., t_3$ $q_0, ..., q_3$

$C_0^0, ..., C_4^3$

$s_0, s_1, s_2, s_3, z_4$

# FIG.3

# FIG.4

FIG.5

# FIG.6

FIG.7

EP 1 924 904 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6175852 B
- US 5636156 B
- US 6578063 B
- US 5719803 A